# EUROPEAN PATENT SPECIFICATION

(11) **EP 4 615 024 B1**
(45) Date of publication and mention of the grant of the patent: **02.12.2026**
(21) Application number: 22964133.7
(22) Date of filing: 04.11.2022
(51) Int. Cl.: H04B 7/06, H04L 5/00, H04W 8/24, H04W 72/51, H04W 72/0453

(54) **COMMUNICATION METHOD AND APPARATUS, AND ELECTRONIC DEVICE AND MEDIUM**
KOMMUNIKATIONSVERFAHREN UND -VORRICHTUNG SOWIE ELEKTRONISCHE VORRICHTUNG UND MEDIUM
PROCÉDÉ ET APPAREIL DE COMMUNICATION, ET DISPOSITIF ÉLECTRONIQUE ET SUPPORT

(43) Date of publication of application: 10.09.2025
(73) Proprietor: Beijing Xiaomi Mobile Software Co., Ltd., Beijing 100085 (CN)
(72) Inventor: GUO, Shengxiang, Beijing 100085 (CN)
(74) Representative: Hersina, Günter
(86) International application number: PCT/CN2022/130140
(87) International publication number: WO 2024/092832

(56) References cited:
- WO-A1-2018/118788
- CN-A- 115 150 815
- CN-A- 115 250 463
- HUAWEI ET AL: "Summary of [AT114-e][031][NR17] UL TX Switching (Huawei)", vol. RAN WG2, no. electronic; 20210517 - 20210527, 24 May 2021 (2021-05-24), XP052013574, Retrieved from the Internet <URL:https://ftp.3gpp.org/tsg_ran/WG2_RL2/TSGR2_114-e/Inbox/R2-2106656.zip R2-2106656 Summary of [031][NR17] UL TX Switching.docx> [retrieved on 20210524]
- NTT DOCOMO ET AL: "Potential issues on UL Tx switching schemes across up to 3 or 4 bands", vol. RAN WG2, no. Electronic meeting; 20220817 - 20220826, 10 August 2022 (2022-08-10), XP052261634, Retrieved from the Internet <URL:https://ftp.3gpp.org/tsg_ran/WG2_RL2/TSGR2_119-e/Docs/R2-2208324.zip R2-2208324 Potential issues on UL Tx switching schemes across up to 3 or 4 bands.docx> [retrieved on 20220810]
- HUAWEI ET AL: "RAN2 impact to support Rel-18 UL Tx switching enhancements", vol. RAN WG2, no. Online; 20220817 - 20220829, 10 August 2022 (2022-08-10), XP052261788, Retrieved from the Internet <URL:https://ftp.3gpp.org/tsg_ran/WG2_RL2/TSGR2_119-e/Docs/R2-2208481.zip R2-2208481 RAN2 impact to support Rel-18 UL Tx switching enhancements.docx> [retrieved on 20220810]
- HUAWEI ET AL: "Discussions on enhancements for UL Tx switching", vol. RAN WG1, no. E-meeting; 20210412 - 20210420, 7 April 2021 (2021-04-07), XP052178129, Retrieved from the Internet <URL:https://ftp.3gpp.org/tsg_ran/WG1_RL1/TSGR1_104b-e/Docs/R1-2103387.zip R1-2103387.docx> [retrieved on 20210407]
- HUAWEI: "Introduction of NG UE Capability Info Indication", 3GPP DRAFT; R3-172594 UE CAPABILITY INFO INDICATION_V1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Qingdao, China; 20170627 - 20170629, 29 June 2017 (2017-06-29), Mobile Competence Centre ; 650, route des Lucioles ; F-06921 Sophia-Antipolis Cedex ; France , XP051308164

## Description

### FIELD

The present disclosure relates to the field of communications, and in particular relates to a communication method performed by a terminal, a communication method performed by a base station, a terminal and a base station.

### BACKGROUND

It is pointed out in the related conference that a super uplink needs to support three or four uplink transmitter (UL Tx) switching solutions. However, no effective solution has been pointed out in the related art, such that a base station may obtain the UL Tx switching capability of a terminal. Therefore, how to ensure that the terminal effectively reports the UL Tx switching capability thereof is a problem to be solved.
HUAWEI ET AL: "Summary of [AT114-e][031][NR17] UL TX Switching (Huawei)", 3GPP DRAFT; R2-2106656, discusses "in RAN2 signaling design, a list of band pair was added to include the following UE capability parameters for each BC."
NTT DOCOMO ET AL: "Potential issues on UL Tx switching schemes across up to 3 or 4 bands", 3GPP DRAFT; R2-2208324, discusses "Indicates the state of Tx chains if the state of Tx chains after the UL Tx switching is not unique (as specified in TS 38.214 [19]) in case of 2Tx-2Tx switching is configured and uplinkTxSwitchingOption is set to dualUL."
HUAWEI ET AL: "RAN2 impact to support Rel-18 UL Tx switching enhancements", 3GPP DRAFT; R2-2208481, discusses "A uplink Tx switching specific BC list (i.e. BandCombinationList-UplinkTxSwitch) is introduced for UE capability reporting."
HUAWEI ET AL: "Discussions on enhancements for UL Tx switching", 3GPP DRAFT; R1-2103387, discusses "In Rel-16, two options are specified for UL CA, i.e. option 1 (switchedUL) and option 2 (dualUL). In option 1, there is no concurrent transmission on the two carriers, which is similar to SUL scenario. In option 2, the concurrent UL transmissions can be scheduled."

### SUMMARY

The invention is set out in the appended set of claims. Any embodiment, aspect, example or implementation not being part of the claims, is only presented as information.

In the technical solution provided in the embodiments of the present disclosure, the option information corresponding to the band combination is reported to the base station with the band combination as the granularity, such that the base station may obtain the band supported by the terminal and the sending form supported by respective bands and band pairs according to the option information reported by the terminal. In this way, the base station may effectively obtain the UL Tx switching capability of the terminal, thereby ensuring the reliability of UL Tx and band switching of the terminal.

### BRIEF DESCRIPTION OF THE DRAWINGS

These and/or other aspects and advantages of the embodiments of the present disclosure will become apparent and more readily appreciated from the following description of embodiments made with reference to the drawings.
FIG. 1 exemplarily shows a schematic diagram of a system architecture applicable to embodiments of the present disclosure.
FIG. 2 is a flow chart illustrating a communication method according to an illustrative embodiment.
FIG. 3 is a flow chart illustrating a communication method according to an illustrative embodiment.
FIG. 4 is a flow chart illustrating a communication method according to an illustrative embodiment.
FIG. 5 is a flow chart illustrating a communication method according to an illustrative embodiment.
FIG. 6 is a flow chart illustrating a communication method according to an illustrative embodiment.
FIG. 7 is a flow chart illustrating a communication method according to an illustrative embodiment.
FIG. 8 is a flow chart illustrating a communication method according to an illustrative embodiment.
FIG. 9 is a flow chart illustrating a communication method according to an illustrative embodiment.
FIG. 10 is a flow chart illustrating a communication method according to an 3 illustrative embodiment.
FIG. 11 is a flow chart illustrating a communication method according to an illustrative embodiment.
FIG. 12 is a flow chart illustrating a communication method according to an illustrative embodiment.
FIG. 13 is a flow chart illustrating a communication method according to an illustrative embodiment.
FIG. 14 is a flow chart illustrating a communication method according to an illustrative embodiment.
FIG. 15 is a flow chart illustrating a communication method according to an illustrative embodiment.
FIG. 16 is a flow chart illustrating a communication method according to an illustrative embodiment.
FIG. 17 is a flow chart illustrating a communication method according to an illustrative embodiment.
FIG. 18 is a flow chart illustrating a communication method according to an illustrative embodiment.
FIG. 19 is a flow chart illustrating a communication method according to an illustrative embodiment.
FIG. 20 is a flow chart illustrating a communication method according to an illustrative embodiment.
FIG. 21 is a block diagram illustrating a communication apparatus according to an illustrative embodiment.
FIG. 22 is a block diagram illustrating a communication apparatus according to an illustrative embodiment.
FIG. 23 is a block diagram illustrating an electronic device according to an illustrative embodiment.
FIG. 24 is a block diagram illustrating an electronic device according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the disclosure. Instead, they are merely examples of apparatuses and methods consistent with aspects related to the disclosure as recited in the appended claims.

First, the implementation environment of embodiments of the present disclosure is described below.

Embodiments of the present disclosure may be applied to a 4th generation mobile communication (4G) evolution system, such as a long term evolution (LTE) system, or may also be applied to a 5th generation mobile communication (5G) system, such as an access network employing a new radio access technology (new RAT), or may also be applied to a communication system such as a cloud radio access network (CRAN).

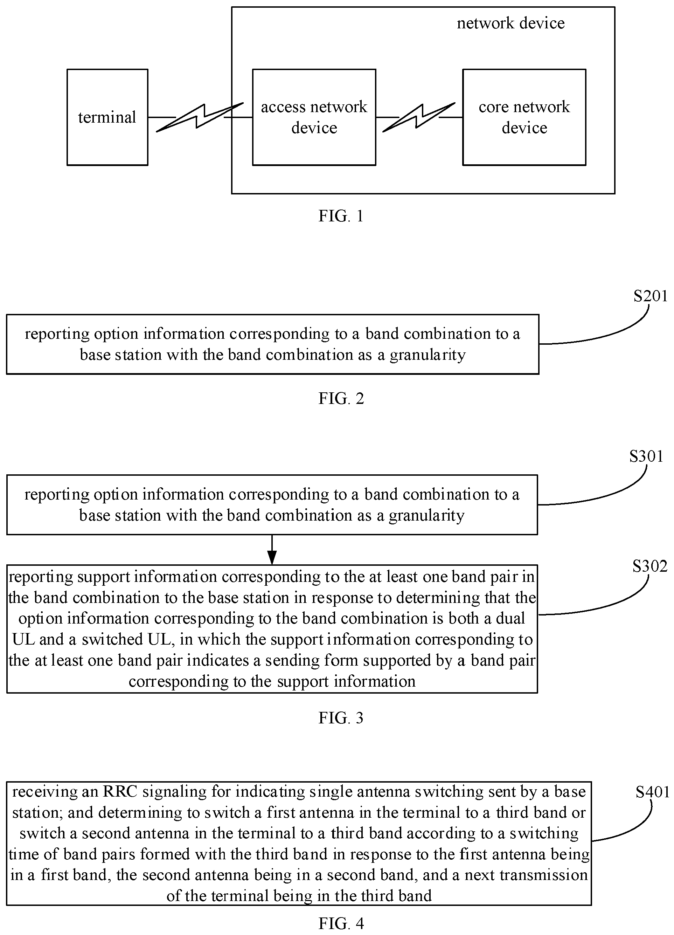

FIG. 1 exemplarily shows a schematic diagram of a system architecture applicable to embodiments of the present disclosure. It should be understood that embodiments of the present disclosure are not limited to the system illustrated in FIG. 1. Furthermore, the device illustrated in FIG. 1 may be hardware, software functionally divided, or a structure in which both of the above hardware and software are combined. As shown in FIG. 1, the system architecture provided in the embodiments of the present disclosure includes a terminal and a network device. In an example, the network device may include an access network device and a core network device, and the terminal may communicate with the core network device via the access network device.

In an example, the access network device may include a base station, which may be a specific implementation form of an access network (AN), may also be referred to as an access node, or a radio access network (RAN) in a form of radio access, to provide a radio access service for the terminal. Specifically, the access node may be a base station in a global system for mobile communication (GSM) system or a code division multiple access (CDMA) system, an NodeB in a wideband code division multiple access (WCDMA) system, an evolved node B (eNB or eNodeB) in an LTE system, a base station apparatus, a small base station apparatus, a wireless access node (WiFiAP), a worldwide interoperability for microwave access base station (WiMAX BS) in a 5G network, or the like, which is not limited in the present disclosure. The access network involves the processing of various positioning procedures, including the positioning of a target terminal, the provision of location-related information unrelated to a specific target terminal, and the transmission of positioning messages between an access management function (AMF) network element or a location management function (LMF) network element in the core network and the target terminal.

The terminal may also be referred to as an access terminal, a user equipment (UE), a subscriber unit, a subscriber station, a mobile station, a mobile, a remote station, a remote terminal, a mobile device, a user terminal, a wireless communication device, a user agent, a user device, or the like. The terminal may be a cellular telephone, a cordless telephone, a session initiation protocol (SIP) telephone, a wireless local loop (WLL) station, a personal digital assistant (PDA), a handheld device with wireless communication capabilities, a computing device or other processing devices connected to a wireless modem, a vehicle-mounted device, a wearable device, an Internet of Things terminal device such as a fire detection sensor, a smart water/electricity meter, a factory monitoring device, or the like.

The core network device may include a mobility management network element, which may include an access and mobility management function (AMF) in 5G. The mobility management network element is responsible for access and mobility management of the terminal in a mobile network. The AMF is responsible for the access and mobility management of the terminal, NAS message routing, session management function (SMF) selection, or the like. The AMF may be used as an intermediate network element for transmitting a session management message between the terminal and the SMF.

The core network device may further include a data management network element for handling device identification, access authentication, registration, mobility management, and the like of the terminal. In the 5G communication system, the data management network element may be a unified data management (UDM) network element.

Further, the core network device may further include a location services (LCS) client and a gateway mobile location centre (GMLC) network element, and the LCS client may access an LCS service from a GMLC. The GMLC network element may include a visited-gateway mobile location centre (V-GMLC), a home-gateway mobile location centre (H-GMLCD) and other network elements. The GMLC network element contains the functions required to support LCS. The GMLC is a first node in a public land mobile network (PLMN) accessed by an external LCS client. An application function (AF) network element and a network function (NF) network element may access the GMLC directly or via a network exposure function (NEF) network element.

The above-described functions may be either network elements in hardware devices, software functions running on dedicated hardware, or virtualized functions instantiated on a platform (e.g., a cloud platform).

It is pointed out in the related conference that a super uplink needs to support three or four uplink transmitter (UL Tx) switching solutions. However, no effective solution has been pointed out in the related art, such that a base station may obtain the UL Tx switching capability of a terminal. Therefore, how to ensure that the terminal effectively reports the UL Tx switching capability thereof is a problem to be solved.

In order to overcome the problems existing in the related art, the present disclosure provides a communication method, a communication apparatus, an electronic device and a medium.

FIG. 2 is a flow chart illustrating a communication method according to an illustrative embodiment, which is performed by a terminal. As shown in FIG. 2, the method includes the following steps.

In step S201, option information corresponding to a band combination is reported to a base station with or taking the band combination as a granularity.

The band combination includes at least two bands, and correspondingly the band combination includes at least one band pair formed by combining the at least two bands; and the option information indicates a sending form supported by respective band pairs and/or respective bands in the band combination.

It may be understood that, before step S201, the terminal may report a band supported by the terminal and its own capabilities to the base station. The band combination may include multiple bands supported by the terminal. Taking the band combination as the granularity may mean that the terminal reports the band supported by the terminal in the band combination to the base station with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

In an example, in a case where the option information corresponding to the band combination is a dual uplink (UL), the option information indicates that all band pairs in the band combination only support a concurrent transmission; in a case where the option information corresponding to the band combination is a switched UL, the option information indicates that all bands in the band combination only support a single transmission; and in a case where the option information corresponding to the band combination is both the dual UL and the switched UL, the option information indicates that the at least one band pair in the band combination supports the concurrent transmission, and at least one band in the band combination supports the single transmission.

The option information may be any one of three options of the dual UL, the switched UL, or both the dual UL and the switched UL, and the option information of the dual UL, the switched UL, or both the dual UL and the switched UL reported by the terminal may be reported according to the capability of the terminal. For example, in a case where none of the band pairs consisting of the bands supported by an antenna of the terminal support the concurrent transmission, the option information of the switched UL may be sent to the base station.

In addition, a band pair consisting of some bands that support the single transmission and other bands in the band combination may or may not support the concurrent transmission, which is not limited in the present disclosure. For example, taking the band combination including three bands n1, n22, and n23 supported by the terminal as an example, in a case where the band n1 supports the single transmission, the band pair consisting of the band n1 and the band n22 may support the concurrent transmission, and the band pair consisting of the band n1 and the band n23 may not support the concurrent transmission.

In the embodiments of the present disclosure, the option information corresponding to the band combination is reported to the base station with the band combination as the granularity, such that the base station may obtain the band supported by the terminal and the sending form supported by the respective bands and band pairs according to the option information reported by the terminal. In this way, the base station may effectively obtain the UL Tx switching capability of the terminal, thereby ensuring the reliability of UL Tx and band switching of the terminal.

FIG. 3 is a flow chart illustrating a communication method according to an illustrative embodiment, which is performed by a terminal. As shown in FIG. 3, the method includes the following steps.

In step S301, option information corresponding to a band combination is reported to a base station with or taking the band combination as a granularity.

The band combination includes at least two bands, and correspondingly the band combination includes at least one band pair formed by combining the at least two bands; and the option information indicates a sending form supported by respective band pairs and/or respective bands in the band combination.

In step S302, support information corresponding to the at least one band pair in the band combination is reported to the base station in response to determining that the option information corresponding to the band combination is both a dual UL and a switched UL, in which the support information corresponding to the at least one band pair indicates a sending form supported by a band pair corresponding to the support information.

It may be understood that, before step S301, the terminal may report a band supported by the terminal and its own capabilities to the base station. The band combination may include multiple bands supported by the terminal. Taking the band combination as the granularity may mean that the terminal reports the band supported by the terminal in the band combination to the base station with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

In a possible implementation, in a case where the terminal determines that the option information corresponding to the band combination is both the dual UL and the switched UL according to its own capability, step S301 may not be executed and only step S302 may be executed. That is, the option information corresponding to the band combination is not reported to the terminal, and only the support information corresponding to the at least one band pair is reported to the base station.

In an example, in a case where support information corresponding to one band pair is a concurrent transmission, the support information indicates that the band pair only supports the concurrent transmission; in a case where the support information corresponding to one band pair is a single transmission, the support information indicates that two bands in the band pair only support the single transmission; and in a case where the support information corresponding to one band pair is a full transmission, the support information indicates that the band pair supports the concurrent transmission, and two bands in the band pair support the single transmission.

In an example, in a case where the option information corresponding to the band combination is the dual UL, the option information indicates that all band pairs in the band combination only support the concurrent transmission; in a case where the option information corresponding to the band combination is the switched UL, the option information indicates that all bands in the band combination only support the single transmission; and in a case where the option information corresponding to the band combination is both the dual UL and the switched UL, the option information indicates that the at least one band pair in the band combination supports the concurrent transmission, and at least one band in the band combination supports the single transmission.

The option information may be any one of three options of the dual UL, the switched UL, or both the dual UL and the switched UL, and the option information of the dual UL, the switched UL, or both the dual UL and the switched UL reported by the terminal may be reported according to the capability of the terminal. For example, in a case where none of the band pairs consisting of the bands supported by an antenna of the terminal support the concurrent transmission, the option information of the switched UL may be sent to the base station.

The support information may also be any one of three options of the dual UL, the switched UL, or both the dual UL and the switched UL. In a case where the support information is the dual UL, the support information may be the concurrent transmission; in a case where the support information is the switched UL, the support information may be the single transmission; and in a case where the support information is both the dual UL and the switched UL, the support information may be the full transmission.

For example, taking the band combination including three bands n1, n22, and n23 supported by the terminal as an example, correspondingly, the band combination may include three band pairs (n1, n22), (n1, n23), and (n22, n23) supported by the terminal. In a case where the support information corresponding to the band pair (n1, n22) is the dual UL, the support information indicates that the band pair only supports the concurrent transmission; in a case where the support information corresponding to the band pair (n1, n23) is the switched UL, the support information indicates that the band pair only supports the single transmission; and in a case where the support information corresponding to the band pair (n22, n23) is both the dual UL and the switched UL, the support information indicates that the band pair supports the concurrent transmission, and two bands in the band pair support the single transmission.

In the embodiments of the present disclosure, in a case where some band pairs in the band combination support the concurrent transmission and some bands in the band combination support the single transmission, the support information corresponding to the at least one band pair is reported, such that the base station may obtain the UL Tx switching capability of the terminal, thereby ensuring the reliability of UL Tx and band switching of the terminal while reducing an amount of information reported.

In an example, the support information corresponding to the at least one band pair includes support information corresponding to at least three band pairs, and a numeric count of the at least three band pairs is less than or equal to a numeric count of band pairs included in the band combination; and support information corresponding to two target band pairs in the at least three band pairs is first support information and second support information, respectively.

In an implementation, the target band pairs are any two band pairs of the at least three band pairs.

It may be understood that the base station may obtain an order of individual band pairs in the band combination reported by the terminal according to information pre-reported by the terminal or according to a pre-definition. Moreover, since the support information corresponding to the two target band pairs is the first support information and the second support information, respectively, the comprehensiveness of the sending form of the band combination reported by the terminal has been ensured to a certain extent. Therefore, in this case, the base station may determine by default that the band pairs for which support information is not reported only support the concurrent transmission, or determine by default that bands in these band pairs only support the single transmission, which is not limited in the present disclosure.

In an implementation, an order of the target band pairs in the at least three band pairs is first two band pairs, or last two band pairs in the at least three band pairs.

For example, in a case where the at least three band pairs are three band pairs (n1, n22), (n1, n23) and (n22, n23), the terminal may report support information corresponding to the respective band pairs in the band combination to the base station in an order. For example, in a case where it is determined that the band pair (n1, n22) only supports the concurrent transmission and the band pair (n1, n23) only supports the single transmission, the terminal may define the two band pairs as the first two band pairs or the last two band pairs according to its own capabilities. In a case where the first two band pairs are located, the terminal may then send the support information corresponding to the three band pairs (n1, n22), (n1, n23), and (n22, n23) in sequence, and the support information corresponding to the band pairs (n1, n22) and (n1, n23) may correspond to the concurrent transmission and the single transmission, respectively.

Optionally, support information corresponding to other band pairs in the support information corresponding to the at least one band pair is determined by the terminal according to its own capabilities, and the other band pairs are band pairs in the at least three band pairs except a target band pair.

Optionally, the first support information is the single transmission and the second support information is the concurrent transmission; or the first support information is the concurrent transmission and the second support information is the single transmission.

For example, the band combination includes three bands n1, n22, and n23 supported by the terminal, and correspondingly the band combination may include three band pairs (n1, n22), (n1, n23), and (n22, n23) supported by the terminal. The terminal may then predefine the band pairs (n1, n22) and (n1, n23) as the dual UL and the switched UL, respectively, or predefine the band pairs (n1, n23) and (n22, n23) as the switched UL and the dual UL, respectively.

It may be understood that predefining the first two band pairs or the last two band pairs as the first support information and the second support information by the terminal is executed only in a case where it is determined that the first two band pairs or the last two band pairs support the first support information and the second support information according to the capability of the terminal. For example, the terminal may determine the band pairs (n1, n22) and (n1, n23) as the first two band pairs only in a case where it is determined that the band pair (n1, n22) only supports the concurrent transmission and the band pair (n1, n23) only supports the single transmission. Correspondingly, the base station may determine which two bands form the first two band pairs or the last two band pairs according to the capability of the terminal and supported bands reported by the terminal.

In this example, by reporting the support information corresponding to the at least three band pairs, the terminal may effectively enable the base station to obtain the UL Tx switching capability of the terminal without reporting the support information corresponding to individual band pairs, thereby ensuring the reliability of UL Tx and band switching of the terminal while reducing an amount of information reported.

In another example, a numeric count of the at least one band pair is not greater than a numeric count of band pairs included in the band combination; and support information corresponding to individual band pairs in the support information corresponding to the at least one band pair is the same and is third support information.

Optionally, the third support information is the concurrent transmission, and the support information corresponding to the at least one band pair indicates that the at least one band pair in the band combination only supports the concurrent transmission, and band pairs except the at least one band pair in the band combination only support the single transmission; or the third support information is the full transmission, and the support information corresponding to the at least one band pair indicates that the at least one band pair in the band combination supports both the concurrent transmission and the single transmission, and band pairs except the at least one band pair in the band combination only support the single transmission; or the third support information is the single transmission, and the support information corresponding to the at least one band pair indicates that the at least one band pair in the band combination only supports the single transmission, and band pairs except the at least one band pair in the band combination only support the concurrent transmission, or band pairs except the at least one band pair in the band combination support both the concurrent transmission and the single transmission.

The third support information is the concurrent transmission, the full transmission, or the single transmission, which may be determined according to the capability of the terminal.

For example, taking the band combination including the three bands n1, n22, and n23 supported by the terminal as an example, correspondingly, the band combination may include the three band pairs (n1, n22), (n1, n23), and (n22, n23) supported by the terminal. In a case where the band pairs (n1, n22) and (n1, n23) only support the concurrent transmission, the terminal may report the support information corresponding to the band pairs (n1, n22) and (n1, n23), that is, the third support information that is the concurrent transmission or the dual UL, and the base station may determine that the band pair (n22, n23) unreported only supports the single transmission.

In this example, by reporting the support information corresponding to at least one band pair among band pairs with the same support information in the band combination, the base station may obtain the sending form supported by the individual band pairs without sending the support information corresponding to the individual band pairs, which may effectively enable the base station to obtain the UL Tx switching capability of the terminal, thereby ensuring the reliability of UL Tx and band switching of the terminal while reducing an amount of information reported.

In an embodiment, a UE reports the option information.

An option of a dual UL means that all band pairs (BP) included in the band combination (BC) only support the concurrent transmission, or that the BP only supports the concurrent transmission.

An option of a switched UL means that all bands included in the BC only support the single transmission, or that the band in the BP only supports the single transmission.

An option of both the dual UL and the switched UL means that all BPs included in the BC support the concurrent transmission and all bands included in the BC support the single transmission, or that the BP only supports the concurrent transmission and the band in the BP only supports the single transmission.

In an embodiment, the UE reports the option information corresponding to the BC with the BC as the granularity. The UE reports at least one BC, each BC includes at least three bands, and preferably, a numeric count of bands is 3 or 4.

The UE reports a sending form supported by the band or the BP in the BC in the following solutions.

Solution 1: at least three BPs are reported, the first two BPs correspond to a first option and a second option, respectively, and the remaining BPs correspond to the first option, the second option or a third option. The first option and the second option are preferably the dual UL and/or the switched UL.

Solution 2: at least three BPs are reported, the last two BPs correspond to a first option and a second option, respectively, and the remaining BPs correspond to the first option, the second option or a third option. The first option and the second option are preferably the dual UL and/or the switched UL.

In another embodiment, the UE reports at least one BC, and each BC includes at least three bands.

The UE reports a sending form supported by the band or the BP in the BC in the following solutions.

Solution 1: the UE reports at least one BP corresponding to a first option, preferably the first option is the dual UL. The remaining BPs in the BC except the band in the BP reported by the UE only support the single transmission, or the remaining BPs in the BC except the BP reported by the UE correspond to the switched UL.

Solution 2: the UE reports at least one BP corresponding to a first option, preferably the first option is both the dual UL and the switched UL. The remaining BPs in the BC except the band in the BP reported by the UE only support the single transmission, or the remaining BPs in the BC except the BP reported by the UE correspond to the switched UL.

Solution 3: the UE reports at least one BP corresponding to a first option, preferably the first option is the switched UL. The remaining BPs in the BC except the BP reported by the UE correspond to both the dual UL and the switched UL, or the remaining BPs in the BC except the BP reported by the UE correspond to the dual UL.

In the related art, a radio resource control (RRC) signaling may be configured as oneT or twoTs, and indicates single antenna switching in a case where the RRC signaling is configured as the oneT, and indicates dual antenna switching in a case where the RRC signaling is configured as the twoTs. In a case where the RRC signaling indicates the single antenna switching, the first antenna is in a first band and the second antenna is in a second band, and an indication is received to indicate that a next transmission is transmitted in a third band, one of the first antenna or the second antenna will remain in an original band, and the other of the first antenna or the second antenna will switch to the third band. However, how to distinguish whether the first antenna switches or the second antenna switches is an urgent problem to be solved.

FIG. 4 is a flow chart illustrating a communication method according to an illustrative embodiment, which is performed by a terminal. As shown in FIG. 4, the method includes the following steps.

In step S401, an RRC signaling for indicating single antenna switching sent by a base station is received; and it is determined to switch a first antenna in the terminal to a third band or switch a second antenna in the terminal to a third band according to a switching time of band pairs formed with the third band in response to the first antenna being in a first band, the second antenna being in a second band, and a next transmission of the terminal being in the third band.

The third band for the next transmission may be carried by the RRC signaling or by other signalings, which is not limited in the present disclosure.

It may be understood that before step S401 is executed, the terminal may first report a band supported by the terminal and its own capabilities to the base station. Correspondingly, the base station may determine whether the terminal switches the first antenna to the third band or switches the second antenna to the third band according to the switching time of the band pairs formed with the third band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. Further, it is determined whether the first antenna or the second antenna is switched to the band n23 according to a switching time between the band n1 and the band n23, and a switching time between the band n22 and the band n23 in the two band pairs (n1, n23) and (n22, n23).

In the embodiments of the present disclosure, in a case where the terminal receives the RRC signaling for indicating the single antenna switching, the terminal determines an antenna to be switched to the third band in the next transmission according to a switching time of a band pair formed between the third band for the next transmission and a band associated with a current antenna and a switching time of another band pair formed between the third band for the next transmission and another band associated with another current antenna, and thus the antenna to be switched to the third band may be reliably determined.

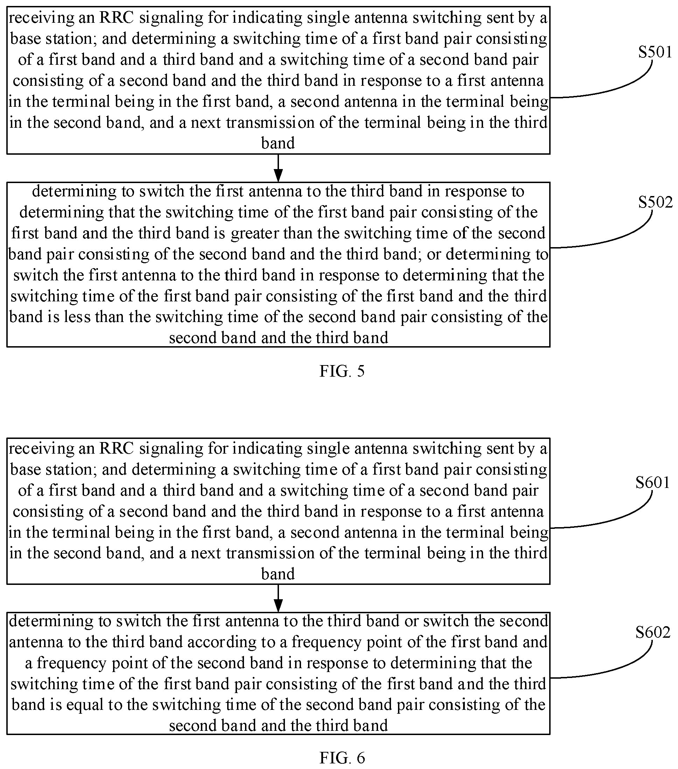

FIG. 5 is a flow chart illustrating a communication method according to an illustrative embodiment, which is performed by a terminal. As shown in FIG. 5, the method includes the following steps.

In step S501, an RRC signaling for indicating single antenna switching sent by a base station is received; and a switching time of a first band pair consisting of a first band and a third band and a switching time of a second band pair consisting of a second band and the third band are determined in response to a first antenna in the terminal being in the first band, a second antenna in the terminal being in the second band, and a next transmission of the terminal being in the third band.

In step S502, it is determined to switch the first antenna to the third band in response to determining that the switching time of the first band pair consisting of the first band and the third band is greater than the switching time of the second band pair consisting of the second band and the third band; or it is determined to switch the first antenna to the third band in response to determining that the switching time of the first band pair consisting of the first band and the third band is less than the switching time of the second band pair consisting of the second band and the third band.

It may be understood that before step S501 is executed, the terminal may first report a band supported by the terminal and its own capabilities to the base station. Correspondingly, the base station may determine whether the terminal switches the first antenna to the third band or switches the second antenna to the third band according to the switching time of the band pairs formed with the third band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. Further, an antenna with larger switching time or less switching time is determined to be switched to the third band according to a switching time between the band n1 and the band n23 and a switching time between the band n22 and the band n23 in the two band pairs (n1, n23) and (n22, n23). For example, in a case where the switching time between the band n1 and the band n2 is 3, and the switching time between the band n22 and the band n23 is 5, it may be determined that the first antenna corresponding to the band n1 having less switching time is switched to the third band.

It is worth noting that, in a case where the terminal selects a solution of switching an antenna corresponding to the less switching time to the third band, the base station selects the solution synchronously. That is, the base station determines that the terminal switches the antenna corresponding to the less switching time to the third band, and communicates with the antenna according to the third band. The same applies to a solution in which the terminal selects an antenna corresponding to larger switching time to be switched to the third band.

In the embodiments of the present disclosure, in a case where the terminal receives the RRC signaling for indicating the single antenna switching, the terminal determines an antenna with larger switching time or less switching time to be switched to the third band in the next transmission according to a switching time of a band pair formed between the third band for the next transmission and a band associated with a current antenna and a switching time of another band pair formed between the third band for the next transmission and another band associated with another current antenna, and thus the antenna to be switched to the third band may be reliably determined.

FIG. 6 is a flow chart illustrating a communication method according to an illustrative embodiment, which is performed by a terminal. As shown in FIG. 6, the method includes the following steps.

In step S601, an RRC signaling for indicating single antenna switching sent by a base station is received; and a switching time of a first band pair consisting of a first band and a third band and a switching time of a second band pair consisting of a second band and the third band are determined in response to a first antenna in the terminal being in the first band, a second antenna in the terminal being in the second band, and a next transmission of the terminal being in the third band.

In step S602, it is determined to switch the first antenna to the third band or switch the second antenna to the third band according to a frequency point of the first band and a frequency point of the second band in response to determining that the switching time of the first band pair consisting of the first band and the third band is equal to the switching time of the second band pair consisting of the second band and the third band.

The frequency point corresponding to each band may be a center frequency point corresponding to the band, or may be a maximum frequency point or a minimum frequency point of the band, which is not limited in the present disclosure.

It may be understood that before step S601 is executed, the terminal may first report a band supported by the terminal and its own capabilities to the base station. Correspondingly, the base station may determine whether the terminal switches the first antenna to the third band or switches the second antenna to the third band according to the switching time of the band pairs formed with the third band and the frequency points of the first band and the second band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. In a case where a switching time of the band pair (n1, n23) is equal to a switching time of the band pair (n22, n23), it may be determined whether to switch the first antenna or the second antenna to the third band according to frequency points of the bands n1 and n22.

In the embodiments of the present disclosure, in a case where the terminal receives the RRC signaling for indicating the single antenna switching and a switching time of a band pair formed between a band associated with a current antenna and the third band for the next transmission is equal to a switching time of another band pair formed between another band associated with another current antenna and the third band for the next transmission, an antenna to be switched to the third band in the next transmission may be determined according to the frequency points of the first band and the second band, and thus the antenna to be switched to the third band may be reliably determined.

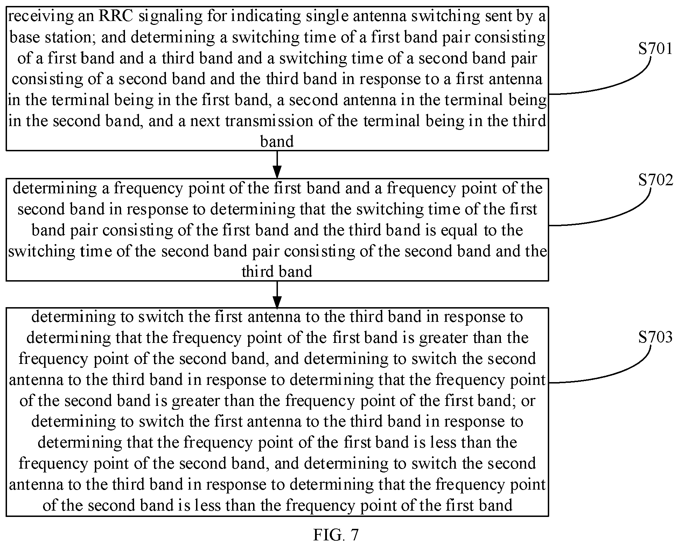

FIG. 7 is a flow chart illustrating a communication method according to an illustrative embodiment, which is performed by a terminal. As shown in FIG. 7, the method includes the following steps.

In step S701, an RRC signaling for indicating single antenna switching sent by a base station is received; and a switching time of a first band pair consisting of a first band and a third band and a switching time of a second band pair consisting of a second band and the third band are determined in response to a first antenna in the terminal being in the first band, a second antenna in the terminal being in the second band, and a next transmission of the terminal being in the third band.

In step S702, a frequency point of the first band and a frequency point of the second band are determined in response to determining that the switching time of the first band pair consisting of the first band and the third band is equal to the switching time of the second band pair consisting of the second band and the third band.

In step S703, it is determined to switch the first antenna to the third band in response to determining that the frequency point of the first band is greater than the frequency point of the second band, and it is determined to switch the second antenna to the third band in response to determining that the frequency point of the second band is greater than the frequency point of the first band; or it is determined to switch the first antenna to the third band in response to determining that the frequency point of the first band is less than the frequency point of the second band, and it is determined to switch the second antenna to the third band in response to determining that the frequency point of the second band is less than the frequency point of the first band.

It should be noted that each band in above embodiments may be a frequency range, or may be a frequency value. The frequency point corresponding to each band may be a frequency value in the frequency range corresponding to the band, for example, it may be a center frequency point corresponding to the band, or it may be a maximum frequency point or a minimum frequency point of the band, or in a case where a certain band is the frequency value, the frequency point of the band may be the frequency value, which is not limited in the present disclosure. It may be understood that before step S701 is executed, the terminal may first report a band supported by the terminal and its own capabilities to the base station. Correspondingly, the base station may determine whether the terminal switches the first antenna to the third band or switches the second antenna to the third band according to the switching time of the band pairs formed with the third band and the frequency points of the first band and the second band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. In a case where a switching time of the band pair (n1, n23) is equal to a switching time of the band pair (n22, n23), it may be determined whether to switch the first antenna or the second antenna to the third band according to frequency points of the bands n1 and n22.

In an implementation, in a case where a frequency point of the band n1 is greater than a frequency point of the band n2, the first antenna corresponding to the band n1 may be switched to the third band n23.

In another implementation, in a case where a frequency point of the band n1 is greater than a frequency point of the band n2, the second antenna corresponding to the band n2 may be switched to the third band n23.

The above two implementations may be selected according to specific needs, which is not specifically limited in the present disclosure. Correspondingly, in a case where any one of embodiments is selected, the base station selects the corresponding implementation. That is, in a case where the first implementation is selected, the base station may determine by default that the terminal switches the first antenna to the third band after sending the RRC signaling for indicating the single antenna switching.

In the embodiments of the present disclosure, in a case where the terminal receives the RRC signaling for indicating the single antenna switching and a switching time of a band pair formed between a band associated with a current antenna and the third band for the next transmission is equal to a switching time of another band pair formed between another band associated with another current antenna and the third band for the next transmission, an antenna to be switched to the third band in the next transmission may be determined according to a magnitude relationship between the frequency point of the first band and the frequency point of the second band, and thus the antenna to be switched to the third band may be reliably determined.

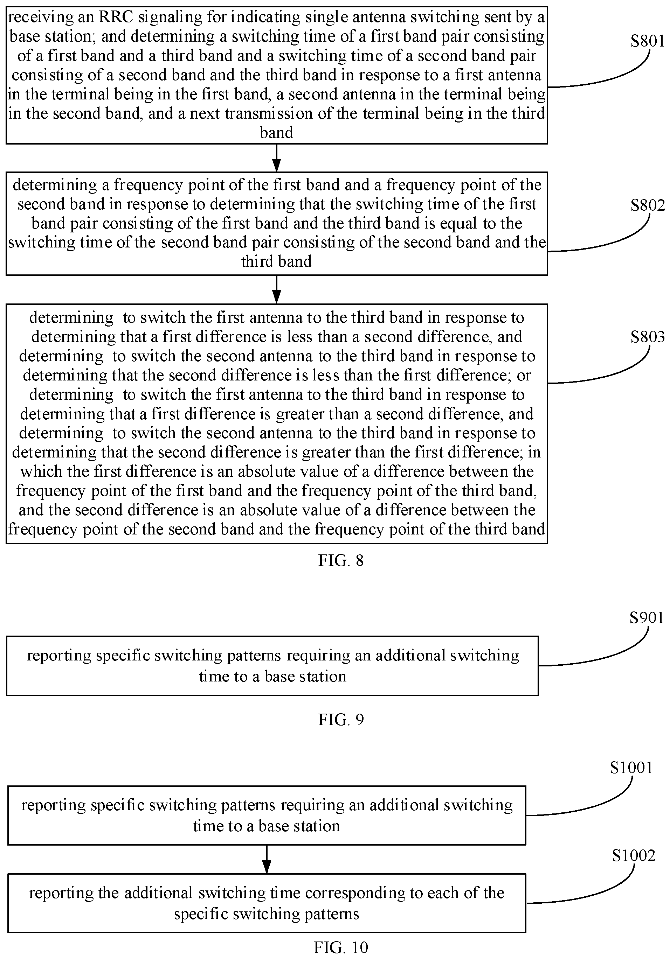

FIG. 8 is a flow chart illustrating a communication method according to an illustrative embodiment, which is performed by a terminal. As shown in FIG. 8, the method includes the following steps.

In step S801, an RRC signaling for indicating single antenna switching sent by a base station is received; and a switching time of a first band pair consisting of a first band and a third band and a switching time of a second band pair consisting of a second band and the third band are determined in response to a first antenna in the terminal being in the first band, a second antenna in the terminal being in the second band, and a next transmission of the terminal being in the third band.

In step S802, a frequency point of the first band and a frequency point of the second band are determined in response to determining that the switching time of the first band pair consisting of the first band and the third band is equal to the switching time of the second band pair consisting of the second band and the third band.

In step S803, it is determined to switch the first antenna to the third band in response to determining that a first difference is less than a second difference, and it is determined to switch the second antenna to the third band in response to determining that the second difference is less than the first difference; or it is determined to switch the first antenna to the third band in response to determining that a first difference is greater than a second difference, and it is determined to switch the second antenna to the third band in response to determining that the second difference is greater than the first difference; in which the first difference is an absolute value of a difference between the frequency point of the first band and the frequency point of the third band, and the second difference is an absolute value of a difference between the frequency point of the second band and the frequency point of the third band.

The frequency point corresponding to each band may be a center frequency point corresponding to the band, or may be a maximum frequency point or a minimum frequency point of the band, which is not limited in the present disclosure.

It may be understood that before step S801 is executed, the terminal may first report a band supported by the terminal and its own capabilities to the base station. Correspondingly, the base station may determine whether the terminal switches the first antenna to the third band or switches the second antenna to the third band according to a switching time of band pairs formed with the third band and the frequency points of the first band and the second band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. In a case where a switching time of the band pair (n1, n23) is equal to a switching time of the band pair (n22, n23), it may be determined whether to switch the first antenna or the second antenna to the third band according to frequency points of the bands n1 and n22.

In an implementation, in a case where a distance between a frequency point of the band n1 and a frequency point of the band n23 is larger than a distance between a frequency point of the band n2 and the frequency point of the band n23, the first antenna corresponding to the band n1 may be switched to the third band n23.

In another implementation, in a case where a distance between a frequency point of the band n1 and a frequency point of the band n23 is larger than a distance between a frequency point of the band n2 and the frequency point of the band n23, the second antenna corresponding to the band n2 may be switched to the third band n23.

The above two implementations may be selected according to specific needs, which is not specifically limited in the present disclosure. Correspondingly, in a case where any one of implementations is selected, the base station selects the corresponding implementation. That is, in a case where the first implementation is selected, the base station may determine by default that the terminal switches the first antenna to the third band after sending the RRC signaling for indicating the single antenna switching.

In the embodiments of the present disclosure, in a case where the terminal receives the RRC signaling for indicating the single antenna switching and a switching time of a band pair formed between a band associated with a current antenna and the third band for the next transmission is equal to a switching time of another band pair formed between another band associated with another current antenna and the third band for the next transmission, an antenna to be switched to the third band in the next transmission may be determined according to a relative magnitude relationship between the frequency point of the first band and the frequency point of the third band and between the frequency point of the second band and the frequency point of the third band, and thus the antenna to be switched to the third band may be reliably determined.

In an embodiment, in response to determining that the terminal receives the RRC signaling for indicating the single antenna switching, or the base station sends the RRC signaling for indicating the single antenna switching, the following applies.

Regarding the terminal, in a case where a first 1Tx is in the first band, a second 1Tx is in the second band, the next transmission is a 1P transmission in the third band, and the base station configures the RRC signaling indicated as oneT, the terminal switches a 1Tx in a band having a shorter switching time in a band pair with the third band to the third band.

In a case where a switching time between the first band and the third band is equal to a switching time between the second band and the third band, a band having a lower or higher frequency point is selected by default, and the 1Tx in the band selected is switched to the third band.

Regarding the base station, in a case where the first 1Tx is in the first band, the second 1Tx is in the second band, the next transmission is the 1P transmission in the third band, and the base station configures the RRC signaling indicated as oneT, the base station assumes that the terminal switches the 1Tx in the band having the shorter switching time in the band pair with the third band to the third band. In a case where the switching time between the first band and the third band is equal to the switching time between the second band and the third band, it is assumed that the terminal selects the band having the lower or higher frequency point by default, and the 1Tx in the band selected is switched to the third band.

In another embodiment, in response to determining that the terminal receives the RRC signaling for indicating the single antenna switching, or the base station sends the RRC signaling for indicating the single antenna switching, the following applies.

Regarding the terminal, in a case where the first 1Tx is in the first band, the second 1Tx is in the second band, the next transmission is a 1P transmission in the third band, and the base station configures the RRC signaling indicated as oneT, the terminal keeps a 1Tx in a band having a longer switching time in a band pair with the third band unchanged.

In a case where the switching time between the first band and the third band is equal to the switching time between the second band and the third band, a band having a lower or higher frequency point is selected by default, and the 1Tx in the band selected is kept unchanged.

Regarding the base station, in a case where the first 1Tx is in the first band, the second 1Tx is in the second band, the next transmission is a 1P transmission in the third band, and the base station configures the RRC signaling indicated as oneT, the base station assumes that the terminal keeps the 1Tx in the band having a longer switching time in a band pair with the third band unchanged. In a case where the switching time between the first band and the third band is equal to the switching time between the second band and the third band, it is assumed that the terminal selects the band having a lower or higher frequency point by default, and the 1Tx in the band selected is kept unchanged.

In yet another embodiment, in response to determining that the terminal receives the RRC signaling for indicating the single antenna switching, the following applies.

Regarding the terminal, in a case where the first 1Tx is in the first band, the second 1Tx is in the second band, the next transmission is a 1P transmission in the third band, and the base station configures the RRC signaling indicated as oneT, the terminal switches the 1Tx in a band having a shorter switching time in a band pair with the third band to the third band.

In a case where the switching time between the first band and the third band is equal to the switching time between the second band and the third band, a band having a frequency point close to or far from the third band is selected by default, and the 1Tx in the band selected is switched to the third band.

In still another embodiment, in response to determining that the terminal receives the RRC signaling for indicating the single antenna switching, the following applies.

Regarding the terminal, in a case where the first 1Tx is in the first band, the second 1Tx is in the second band, the next transmission is a 1P transmission in the third band, and the base station configures the RRC signaling indicated as oneT, the terminal keeps the 1Tx in a band having a longer switching time in a band pair with the third band unchanged.

In a case where the switching time between the first band and the third band is equal to the switching time between the second band and the third band, a band having a frequency point close to or far from the third band is selected by default, and the 1Tx in the band selected is switched to the third band.

In the related art, there is no relevant research on a switching time of specific switching patterns of an uplink antenna. However, some of the switching patterns may require larger switching time. Therefore, how to limit the switching time of these specific switching patterns to ensure the reliability of the communication between the terminal and the base station is an urgent problem to be solved.

FIG. 9 is a flow chart illustrating a communication method according to an illustrative embodiment, which is performed by a terminal. As shown in FIG. 9, the method includes the following steps.

In step S901, specific switching patterns requiring an additional switching time are reported to a base station.

It may be understood that the additional switching time is included in a time of an entire process for switching an uplink antenna. In addition, the specific switching pattern may include multiple patterns, and the specific switching pattern may be defined according to actual needs, which is not limited in the present disclosure.

In an example, the specific switching patterns correspond to a same additional switching time.

The additional switching time may be reported to the base station via the terminal, or may be pre-configured in the base station, which is not limited in the present disclosure.

In an example, the additional switching time is multiple time domain symbols, a duration corresponding to the time domain symbol is associated with a reference subcarrier spacing (SCS), and the reference SCS corresponds to a first bandwidth part (BWP) in a band where an antenna is located before switched.

Correspondingly, the additional switching time may be configured by taking the first BWP as a reference BWP and multiplexing an SCS of the reference BWP.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the specific switching patterns requiring the additional switching time are reported to the base station, such that the terminal may be synchronized with the base station when performing uplink antenna switching in a specific pattern, thereby ensuring the reliable communication between the terminal and the base station.

FIG. 10 is a flow chart illustrating a communication method according to an illustrative embodiment, which is performed by a terminal. As shown in FIG. 10, the method includes the following steps.

In step S1001, specific switching patterns requiring an additional switching time are reported to a base station, in which the specific switching patterns correspond to a same additional switching time.

In step S1002, the additional switching time corresponding to each of the specific switching patterns is reported.

It may be understood that the additional switching time is included in a time of an entire process for switching an uplink antenna. In addition, the specific switching pattern may include multiple patterns, and the specific switching pattern may be defined according to actual needs, which is not limited in the present disclosure.

For example, in step S1002, the terminal may report a first time corresponding to a first specific pattern, a second time corresponding to a second specific pattern, and the like.

In an example, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Correspondingly, the additional switching time may be configured by taking the first bandwidth part as a reference bandwidth part and multiplexing a subcarrier spacing of the reference bandwidth part.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the specific switching patterns requiring the additional switching time and the additional switching time corresponding to each of the specific switching patterns are reported to the base station, such that the terminal may be synchronized with the base station when performing uplink antenna switching in a specific pattern, thereby ensuring the reliable communication between the terminal and the base station.

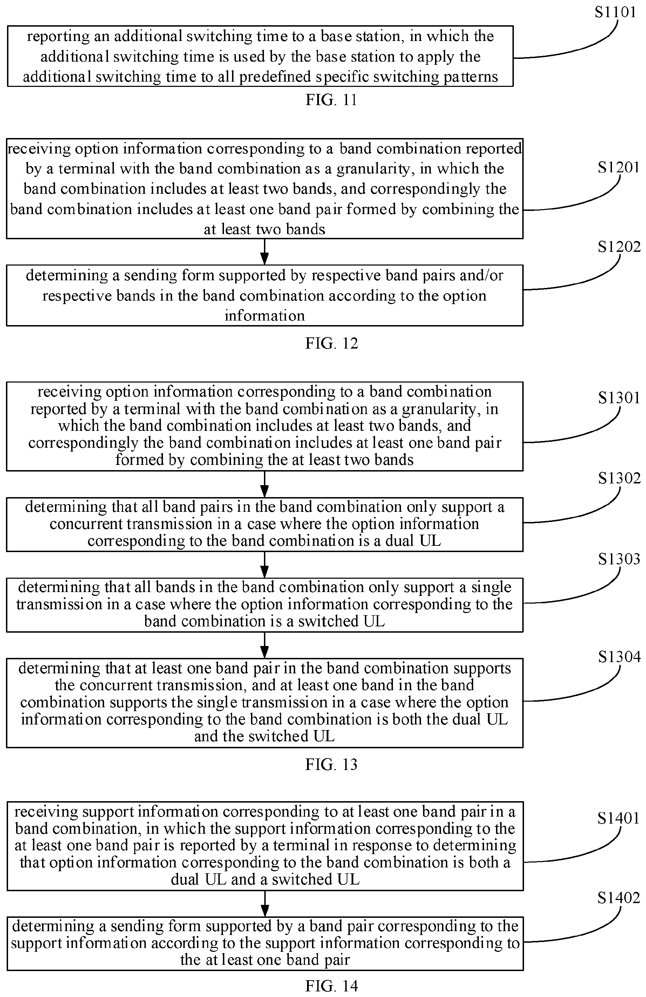

FIG. 11 is a flow chart illustrating a communication method according to an illustrative embodiment, which is performed by a terminal. As shown in FIG. 11, the method includes the following steps.

In step S1101, an additional switching time is reported to a base station, in which the additional switching time is used by the base station to apply the additional switching time to all predefined specific switching patterns.

It may be understood that the additional switching time is included in a time of an entire process of uplink antenna switching. In addition, the specific switching pattern may include multiple patterns, and the specific switching pattern may be defined according to actual needs, which is not limited in the present disclosure.

For example, in a case where the specific switching pattern includes a first specific pattern and a second specific pattern, after reporting the additional switching time, the terminal may perform uplink antenna switching in the first specific pattern and the second specific pattern according to the additional switching time.

In an example, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Correspondingly, the additional switching time may be configured by taking the first bandwidth part as a reference bandwidth part and multiplexing a subcarrier spacing of the reference bandwidth part.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the additional switching time is reported to the base station, and applied to all predefined specific switching patterns, such that the terminal may be synchronized with the base station when performing uplink antenna switching in a specific pattern, thereby ensuring the reliable communication between the terminal and the base station.

In an optional embodiment, the additional switching time is included in the time of the entire process for switching an uplink antenna. An additional switching time reporting granularity is N time domain symbols, and the configuration of the SCS and the like is multiplexed by taking the first BWP in the first band as the reference BWP. Solutions for determining the first BWP includes as follows:
Solution 1: the newly activated BWP.
Solution 2: the initial BWP.
Solution 3: the first activated BWP.
Solution 4: the BWP with the highest center frequency point or the lowest center frequency point.
Solution 5: the BWP with the maximum SCS or the minimum SCS.

The solution of reporting the specific switching pattern by the terminal includes at least one of the following solutions.

Solution 1: the specific switching patterns requiring the additional switching time are reported, and all the specific switching patterns reported share the same additional switching time.

Solution 2: the specific switching patterns requiring the additional switching time are reported, and the specific switching patterns correspond to the same additional switching time. For example, {the first specific pattern, the first time}, {the second specific pattern, the second time}.

Solution 3: the specific switching pattern is predefined according to a communication protocol. The terminal reports at least one additional switching time, and the additional switching time reported is applied to all specific switching patterns predefined according to the communication protocol.

FIG. 12 is a flow chart illustrating a communication method according to an illustrative embodiment, which is performed by a base station. As shown in FIG. 12, the method includes the following steps.

In step S1201, option information corresponding to a band combination reported by a terminal is received with or taking the band combination as a granularity, in which the band combination includes at least two bands, and correspondingly the band combination includes at least one band pair formed by combining the at least two bands.

In step S1202, a sending form supported by respective band pairs and/or respective bands in the band combination is determined according to the option information.

The band combination includes the at least two bands, and correspondingly the band combination includes the at least one band pair formed by combining the at least two bands; and the option information indicates the sending form supported by the respective band pairs and/or the respective bands in the band combination.

It may be understood that, before step S1201, the terminal may report a band supported by the terminal and its own capabilities to the base station, such that the base station obtains the band supported by the terminal and the capability of the terminal. The band combination may include multiple bands supported by the terminal. Taking the band combination as the granularity may mean that the base station receives the band supported by the terminal in the band combination sent by the terminal with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

In the embodiments of the present disclosure, the option information corresponding to the band combination is reported to the base station with the band combination as the granularity, such that the base station may obtain the band supported by the terminal and the sending form supported by the respective bands and band pairs according to the option information reported by the terminal. In this way, the base station may effectively obtain the UL Tx switching capability of the terminal, thereby ensuring the reliability of UL Tx and band switching of the terminal.

FIG. 13 is a flow chart illustrating a communication method according to an illustrative embodiment, which is performed by a base station. As shown in FIG. 13, the method includes the following steps.

In step S1301, option information corresponding to a band combination reported by a terminal is received with or taking the band combination as a granularity, in which the band combination includes at least two bands, and correspondingly the band combination includes at least one band pair formed by combining the at least two bands.

In step S1302, it is determined that all band pairs in the band combination only support a concurrent transmission in a case where the option information corresponding to the band combination is a dual UL.

In step S1303, it is determined that all bands in the band combination only support a single transmission in a case where the option information corresponding to the band combination is a switched UL.

In step S1304, it is determined that at least one band pair in the band combination supports the concurrent transmission, and at least one band in the band combination supports the single transmission in a case where the option information corresponding to the band combination is both the dual UL and the switched UL.

The band combination includes the at least two bands, and correspondingly the band combination includes the at least one band pair formed by combining the at least two bands; and the option information indicates the sending form supported by the respective band pairs and/or the respective bands in the band combination.

It may be understood that, before step S1301, the terminal may report a band supported by the terminal and its own capabilities to the base station, such that the base station obtains the band supported by the terminal and the capability of the terminal. The band combination may include multiple bands supported by the terminal. Taking the band combination as the granularity may mean that the base station receives the band supported by the terminal in the band combination sent by the terminal with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

In an example, in a case where the option information corresponding to the band combination is the dual UL, the base station may determine that all band pairs in the band combination only support the concurrent transmission; in a case where the option information corresponding to the band combination is the switched UL, the base station may determine that all bands in the band combination only support the single transmission; and in a case where the option information corresponding to the band combination is both the dual UL and the switched UL, the base station may determine that the at least one band pair in the band combination supports the concurrent transmission, and at least one band in the band combination supports the single transmission.

The option information may be any one of three options of the dual UL, the switched UL, or both the dual UL and the switched UL, and the option information of the dual UL, the switched UL, or both the dual UL and the switched UL reported by the terminal may be reported according to the capability of the terminal. For example, in a case where none of the band pairs consisting of the bands supported by an antenna of the terminal support the concurrent transmission, the option information of the switched UL may be sent to the base station.

In addition, a band pair consisting of some bands that support the single transmission and other bands in the band combination may or may not support the concurrent transmission, which is not limited in the present disclosure. For example, taking the band combination including the three bands n1, n22, and n23 supported by the terminal as an example, in a case where the band n1 supports the single transmission, the band pair consisting of the band n1 and the band n22 may support the concurrent transmission, and the band pair consisting of the band n1 and the band n23 may not support the concurrent transmission.

In the embodiments of the present disclosure, the option information corresponding to the band combination is reported to the base station with the band combination as the granularity, such that the base station may obtain the band supported by the terminal and the sending form supported by the respective bands and band pairs according to the option information reported by the terminal. In this way, the base station may effectively obtain the UL Tx switching capability of the terminal, thereby ensuring the reliability of UL Tx and band switching of the terminal.

FIG. 14 is a flow chart illustrating a communication method according to an illustrative embodiment, which is performed by a base station. As shown in FIG. 14, the method includes the following steps.

In step S1401, support information corresponding to at least one band pair in a band combination is received, in which the support information corresponding to the at least one band pair is reported by a terminal in response to determining that option information corresponding to the band combination is both a dual UL and a switched UL.

In step S1402, a sending form supported by a band pair corresponding to the support information is determined according to the support information corresponding to the at least one band pair.

The band combination includes at least two bands, and correspondingly the band combination includes the at least one band pair formed by combining the at least two bands; and the option information indicates the sending form supported by respective band pairs and/or respective bands in the band combination.

In an example, before step S1401 is executed, the option information corresponding to the band combination reported by the terminal may be received, and step S1401 and subsequent steps may be executed in a case where it is determined that the option information is both the dual UL and the switched UL.

It may be understood that, before step S1401, the terminal may report a band supported by the terminal and its own capabilities to the base station, such that the base station obtains the band supported by the terminal and the capability of the terminal. The band combination may include multiple bands supported by the terminal. Taking the band combination as the granularity may mean that the base station receives the band supported by the terminal in the band combination sent by the terminal with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

In the embodiments of the present disclosure, in a case where some band pairs in the band combination support the concurrent transmission and some bands in the band combination support the single transmission, the support information corresponding to the at least one band pair reported by the terminal is received, such that the base station may obtain the UL Tx switching capability of the terminal, thereby ensuring the reliability of UL Tx and band switching of the terminal while reducing an amount of information reported.

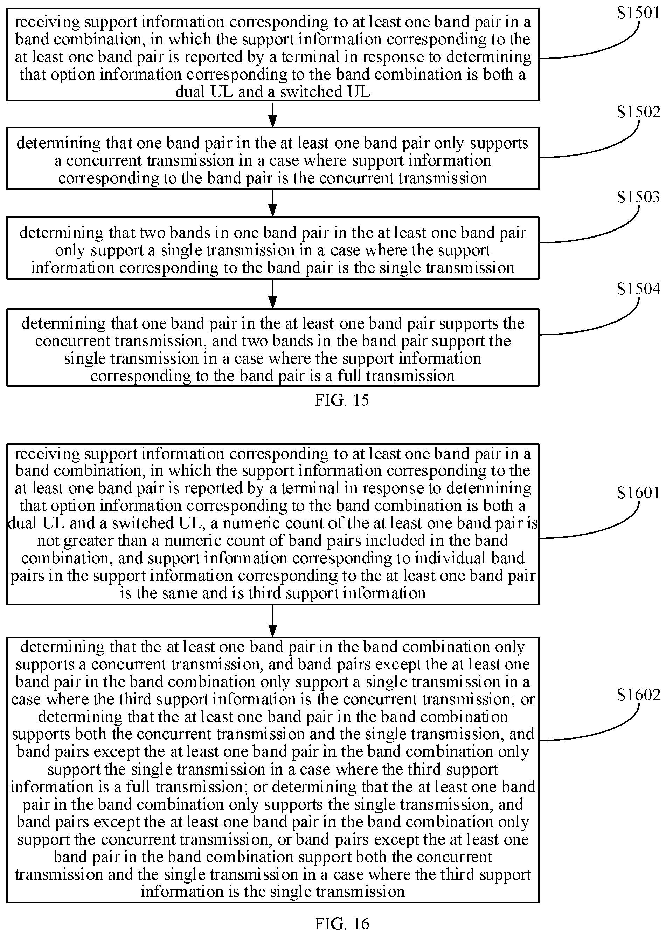

FIG. 15 is a flow chart illustrating a communication method according to an illustrative embodiment, which is performed by a base station. As shown in FIG. 15, the method includes the following steps.

In step S1501, support information corresponding to at least one band pair in a band combination is received, in which the support information corresponding to the at least one band pair is reported by a terminal in response to determining that option information corresponding to the band combination is both a dual UL and a switched UL.

In step S1502, it is determined that one band pair in the at least one band pair only supports a concurrent transmission in a case where support information corresponding to the band pair is the concurrent transmission.

In step S1503, it is determined that two bands in one band pair in the at least one band pair only support a single transmission in a case where support information corresponding to the band pair is the single transmission.

In step S1504, it is determined that one band pair in the at least one band pair supports the concurrent transmission, and two bands in the band pair support the single transmission in a case where support information corresponding to the band pair is a full transmission.

The band combination includes at least two bands, and correspondingly the band combination includes the at least one band pair formed by combining the at least two bands; and the option information indicates a sending form supported by respective band pairs and/or respective bands in the band combination.

In an example, before step S1501 is executed, the option information corresponding to the band combination reported by the terminal may be received, and step S1501 and subsequent steps may be executed in a case where it is determined that the option information is both the dual UL and the switched UL.

It may be understood that, before step S1501, the terminal may report a band supported by the terminal and its own capabilities to the base station, such that the base station obtains the band supported by the terminal and the capability of the terminal. The band combination may include multiple bands supported by the terminal. Taking the band combination as the granularity may mean that the base station receives the band supported by the terminal in the band combination sent by the terminal with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

The support information may also be any one of three options of the dual UL, the switched UL, or both the dual UL and the switched UL. In a case where the support information is the dual UL, the support information may be the concurrent transmission; in a case where the support information is the switched UL, the support information may be the single transmission; and in a case where the support information is both the dual UL and the switched UL, the support information may be the full transmission.

For example, taking the band combination including three bands n1, n22, and n23 supported by the terminal as an example, correspondingly, the band combination may include three band pairs (n1, n22), (n1, n23), and (n22, n23) supported by the terminal. In a case where the support information corresponding to the band pair (n1, n22) is the dual UL, the support information indicates that the band pair only supports the concurrent transmission; in a case where the support information corresponding to the band pair (n1, n23) is the switched UL, the support information indicates that the band pair only supports the single transmission; and in a case where the support information corresponding to the band pair (n22, n23) is both the dual UL and the switched UL, the support information indicates that the band pair supports the concurrent transmission, and two bands in the band pair support the single transmission.

In the embodiments of the present disclosure, in a case where some band pairs in the band combination support the concurrent transmission and some bands in the band combination support the single transmission, the support information corresponding to the at least one band pair is reported, such that the base station may obtain the UL Tx switching capability of the terminal, thereby ensuring the reliability of UL Tx and band switching of the terminal while reducing an amount of information reported.

In an example, the support information corresponding to the at least one band pair includes support information corresponding to at least three band pairs, and a numeric count of the at least three band pairs is less than or equal to a numeric count of band pairs included in the band combination; and support information corresponding to two target band pairs in the at least three band pairs is first support information and second support information, respectively.

In an implementation, the target band pairs are any two band pairs of the at least three band pairs.

It may be understood that the base station may obtain an order of individual band pairs in the band combination reported by the terminal according to information pre-reported by the terminal or according to a pre-definition. Moreover, since the support information corresponding to the two target band pairs is the first support information and the second support information, respectively, the comprehensiveness of the sending form of the band combination reported by the terminal has been ensured to a certain extent. Therefore, in this case, the base station may determine by default that the band pairs for which support information is not reported only support the concurrent transmission, or determine by default that bands in these band pairs only support the single transmission, which is not limited in the present disclosure.

In an implementation, an order of the target band pairs in the at least three band pairs is first two band pairs, or last two band pairs in the at least three band pairs.

For example, in a case where the at least three band pairs are three band pairs (n1, n22), (n1, n23) and (n22, n23), the terminal may report support information corresponding to the respective band pairs in the band combination to the base station in an order. For example, in a case where it is determined that the band pair (n1, n22) only supports the concurrent transmission and the band pair (n1, n23) only supports the single transmission, the terminal may define the two band pairs as the first two band pairs or the last two band pairs according to its own capabilities. In a case where the first two band pairs are located, the terminal may then send the support information corresponding to the three band pairs (n1, n22), (n1, n23), and (n22, n23) in sequence, and the support information corresponding to the band pairs (n1, n22) and (n1, n23) may correspond to the concurrent transmission and the single transmission, respectively.

Optionally, support information corresponding to other band pairs in the support information corresponding to the at least one band pair is determined by the terminal according to its own capabilities, and the other band pairs are band pairs in the at least three band pairs except a target band pair.

Optionally, the first support information is the single transmission and the second support information is the concurrent transmission; or the first support information is the concurrent transmission and the second support information is the single transmission.

For example, the band combination includes three bands n1, n22, and n23 supported by the terminal, and correspondingly the band combination may include three band pairs (n1, n22), (n1, n23), and (n22, n23) supported by the terminal. The terminal may then predefine the band pairs (n1, n22) and (n1, n23) as the dual UL and the switched UL, respectively, or predefine the band pairs (n1, n23) and (n22, n23) as the switched UL and the dual UL, respectively.

It may be understood that predefining the first two band pairs or the last two band pairs as the first support information and the second support information by the terminal is executed only in a case where it is determined that the first two band pairs or the last two band pairs support the first support information and the second support information according to the capability of the terminal. For example, the terminal may determine the band pairs (n1, n22) and (n1, n23) as the first two band pairs only in a case where it is determined that the band pair (n1, n22) only supports the concurrent transmission and the band pair (n1, n23) only supports the single transmission. Correspondingly, the base station may determine which two bands form the first two band pairs or the last two band pairs according to the capability of the terminal and supported bands reported by the terminal.

In this example, by receiving support information corresponding to at least three band pairs among band pairs with the same support information in the band combination, the base station may obtain the sending form supported by the individual band pairs without receiving the support information corresponding to the individual band pairs. In this way, the base station may obtain the UL Tx switching capability of the terminal, thereby ensuring the reliability of UL Tx and band switching of the terminal while reducing an amount of information reported.

FIG. 16 is a flow chart illustrating a communication method according to an illustrative embodiment, which is performed by a base station. As shown in FIG. 16, the method includes the following steps.

In step S1601, support information corresponding to at least one band pair in a band combination is received, in which the support information corresponding to the at least one band pair is reported by a terminal in response to determining that option information corresponding to the band combination is both a dual UL and a switched UL, a numeric count of the at least one band pair is not greater than a numeric count of band pairs included in the band combination, and support information corresponding to individual band pairs in the support information corresponding to the at least one band pair is the same and is third support information.

In step S1602, it is determined that the at least one band pair in the band combination only supports a concurrent transmission, and band pairs except the at least one band pair in the band combination only support a single transmission in a case where the third support information is the concurrent transmission; or it is determined that the at least one band pair in the band combination supports both the concurrent transmission and the single transmission, and band pairs except the at least one band pair in the band combination only support the single transmission in a case where the third support information is a full transmission; or it is determined that the at least one band pair in the band combination only supports the single transmission, and band pairs except the at least one band pair in the band combination only support the concurrent transmission, or band pairs except the at least one band pair in the band combination support both the concurrent transmission and the single transmission in a case where the third support information is the single transmission.

The third support information is the concurrent transmission, the full transmission or the single transmission, which may be determined according to the capability of the terminal.

The band combination includes at least two bands, and correspondingly the band combination includes the at least one band pair formed by combining the at least two bands; and the option information indicates a sending form supported by respective band pairs and/or respective bands in the band combination.

In an example, before step S1601 is executed, the option information corresponding to the band combination reported by the terminal may be received, and step S1601 and subsequent steps may be executed in a case where it is determined that the option information is both the dual UL and the switched UL.

It may be understood that, before step S1601, the terminal may report a band supported by the terminal and its own capabilities to the base station, such that the base station obtains the band supported by the terminal and the capability of the terminal. The band combination may include multiple bands supported by the terminal. Taking the band combination as the granularity may mean that the base station receives the band supported by the terminal in the band combination sent by the terminal with the band combination as a smallest unit.

In a specific implementation, the band combination may include three or four or more bands. For example, the band combination includes three bands n1, n22, and n23 supported by the terminal, and correspondingly the band combination may include three band pairs (n1, n22), (n1, n23), and (n22, n23) supported by the terminal.

The support information may also be any one of three options of the dual UL, the switched UL, or both the dual UL and the switched UL. In a case where the support information is the dual UL, the support information may be the concurrent transmission; in a case where the support information is the switched UL, the support information may be the single transmission; and in a case where the support information is both the dual UL and the switched UL, the support information may be the full transmission.

For example, taking the band combination including three bands n1, n22, and n23 supported by the terminal as an example, correspondingly, the band combination may include three band pairs (n1, n22), (n1, n23), and (n22, n23) supported by the terminal. In a case where the band pairs (n1, n22) and (n1, n23) only support the concurrent transmission, the terminal may report the support information corresponding to the band pairs (n1, n22) and (n1, n23), that is, the third support information that is the concurrent transmission or the dual UL, and the base station may determine that the band pair (n22, n23) unreported only supports the single transmission.

In the embodiments of the present disclosure, by receiving support information corresponding to at least one band pair among band pairs with the same support information in the band combination, the base station may obtain the sending form supported by the individual band pairs without receiving the support information corresponding to the individual band pairs. In this way, the base station may obtain the UL Tx switching capability of the terminal, thereby ensuring the reliability of UL Tx and band switching of the terminal while reducing an amount of information reported.

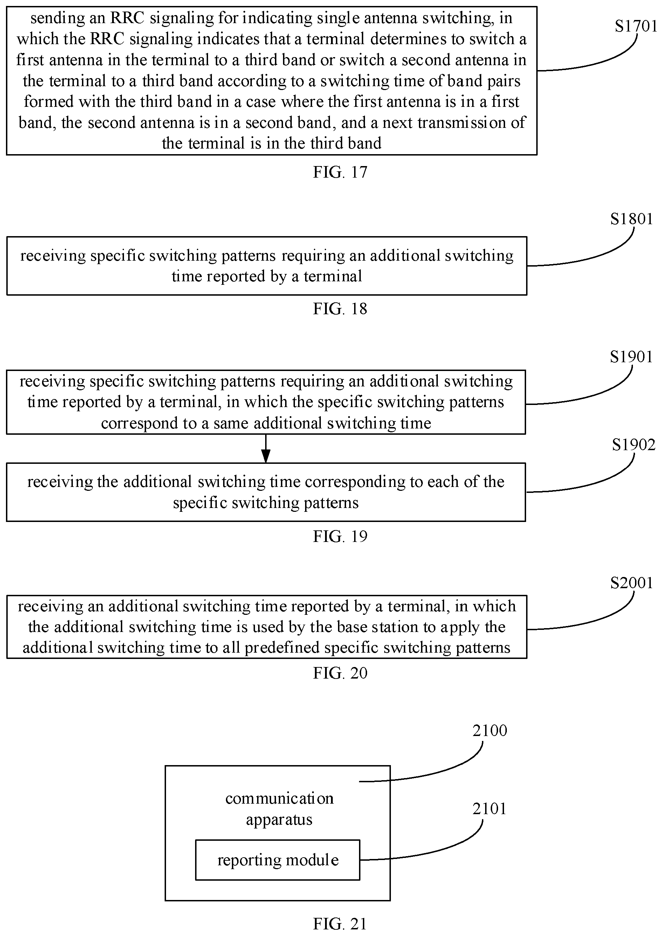

FIG. 17 is a flow chart illustrating a communication method according to an illustrative embodiment, which is performed by a base station. As shown in FIG. 17, the method includes the following steps.

In step S1701, an RRC signaling for indicating single antenna switching is sent, in which the RRC signaling indicates that a terminal determines to switch a first antenna in the terminal to a third band or switch a second antenna in the terminal to a third band according to a switching time of band pairs formed with the third band in a case where the first antenna is in a first band, the second antenna is in a second band, and a next transmission of the terminal is in the third band.

The third band for the next transmission may be carried by the RRC signaling or by other signalings, which is not limited in the present disclosure.

It may be understood that before step S1701 is executed, the terminal may first report a band supported by the terminal and its own capabilities to the base station. Correspondingly, the base station may determine whether the terminal switches the first antenna to the third band or switches the second antenna to the third band according to the switching time of the band pairs formed with the third band.

For example, taking three bands n1, n22, and n23 supported by the terminal as an example, the band n1 is the first band, the band n22 is the second band, and the band n23 is the third band. The third band may form two band pairs (n1, n23) and (n22, n23) with the first band and the second band. Further, it is determined whether the first antenna or the second antenna is switched to the band n23 according to a switching time between the band n1 and the band n23, and a switching time between the band n22 and the band n23 in the two band pairs (n1, n23) and (n22, n23).

In the embodiments of the present disclosure, in a case where the terminal receives the RRC signaling for indicating the single antenna switching, the terminal determines an antenna to be switched to the third band in the next transmission according to a switching time of a band pair formed between the third band for the next transmission and a band associated with a current antenna and a switching time of another band pair formed between the third band for the next transmission and another band associated with another current antenna, and thus the antenna to be switched to the third band may be reliably determined.

In an example, the terminal determines to switch the first antenna to the third band in response to determining that a switching time of a first band pair consisting of the first band and the third band is greater than a switching time of a second band pair consisting of the second band and the third band; or the terminal determines to switch the first antenna to the third band in response to determining that a switching time of a first band pair consisting of the first band and the third band is less than a switching time of a second band pair consisting of the second band and the third band.

Accordingly, the base station may determine whether the terminal switches the first antenna to the third band or switches the second antenna to the third band according to a magnitude relationship of the switching time of the band pairs formed with the third band.

In another example, in a case where it is determined that a switching time of a first band pair consisting of the first band and the third band is equal to a switching time of a second band pair consisting of the second band and the third band, the terminal determines to switch the first antenna to the third band or switch the second antenna to the third band according to a frequency point of the first band and a frequency point of the second band in response to determining that the switching time of the first band pair consisting of the first band and the third band is equal to the switching time of the second band pair consisting of the second band and the third band.

Accordingly, the base station may determine whether the terminal switches the first antenna to the third band or switches the second antenna to the third band according to the switching time of the band pairs formed with the third band and the frequency points of the first band and the second band.

In another example, in a case where it is determined that the switching time of the first band pair consisting of the first band and the third band is equal to the switching time of the second band pair consisting of the second band and the third band, the terminal determines to switch the first antenna to the third band in response to determining that the frequency point of the first band is greater than the frequency point of the second band, and determines to switch the second antenna to the third band in response to determining that the frequency point of the second band is greater than the frequency point of the first band; or the terminal determines to switch the first antenna to the third band in response to determining that the frequency point of the first band is less than the frequency point of the second band, and determines to switch the second antenna to the third band in response to determining that the frequency point of the second band is less than the frequency point of the first band.

Accordingly, the base station may determine whether the terminal switches the first antenna to the third band or switches the second antenna to the third band according to the switching time of the band pairs formed with the third band and a magnitude relationship between the frequency point of the first band and the frequency point of the second band.

In another example, in a case where it is determined that the switching time of the first band pair consisting of the first band and the third band is equal to the switching time of the second band pair consisting of the second band and the third band, the terminal determines to switch the first antenna to the third band in response to determining that a first difference is less than a second difference, and determines to switch the second antenna to the third band in response to determining that the second difference is less than the first difference; or the terminal determines to switch the first antenna to the third band in response to determining that a first difference is greater than a second difference, and determines to switch the second antenna to the third band in response to determining that the second difference is greater than the first difference; in which the first difference is an absolute value of a difference between the frequency point of the first band and the frequency point of the third band, and the second difference is an absolute value of a difference between the frequency point of the second band and the frequency point of the third band.

Accordingly, the base station may determine whether the terminal switches the first antenna to the third band or switches the second antenna to the third band according to the switching time of the band pairs formed with the third band and a correlation relationship between the frequency points of the first band and the second band and the frequency point of the third band.

FIG. 18 is a flow chart illustrating a communication method according to an illustrative embodiment, which is performed by a base station. As shown in FIG. 18, the method includes the following steps.

In step S1801, specific switching patterns requiring an additional switching time reported by a terminal are received.

It may be understood that the additional switching time is included in a time of an entire process for switching an uplink antenna. In addition, the specific switching pattern may include multiple patterns, and the specific switching pattern may be defined according to actual needs, which is not limited in the present disclosure.

In an example, the specific switching patterns correspond to a same additional switching time.

The additional switching time may be reported to the base station via the terminal, or may be pre-configured in the base station, which is not limited in the present disclosure.

In an example, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Correspondingly, the additional switching time may be configured by taking the first bandwidth part as a reference bandwidth part and multiplexing a subcarrier spacing of the reference bandwidth part.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the specific switching patterns requiring the additional switching time reported by the terminal is received, such that the terminal may be synchronized with the base station when performing uplink antenna switching in a specific pattern, thereby ensuring the reliable communication between the terminal and the base station.

FIG. 19 is a flow chart illustrating a communication method according to an illustrative embodiment, which is performed by a base station. As shown in FIG. 19, the method includes the following steps.

In step S1901, specific switching patterns requiring an additional switching time reported by a terminal is received, in which the specific switching patterns correspond to a same additional switching time.

In step S1902, the additional switching time corresponding to each of the specific switching patterns reported by the terminal is received.

It may be understood that the additional switching time is included in a time of an entire process for switching an uplink antenna. In addition, the specific switching pattern may include multiple patterns, and the specific switching pattern may be defined according to actual needs, which is not limited in the present disclosure.

For example, in step S1902, the base station may receive a first time corresponding to a first specific pattern, a second time corresponding to a second specific pattern, and the like.

In an example, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Correspondingly, the additional switching time may be configured by taking the first bandwidth part as a reference bandwidth part and multiplexing a subcarrier spacing of the reference bandwidth part.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the specific switching patterns requiring the additional switching time and the additional switching time corresponding to each of the specific switching patterns reported by the terminal are received, such that the terminal may be synchronized with the base station when performing uplink antenna switching in a specific pattern, thereby ensuring the reliable communication between the terminal and the base station.

FIG. 20 is a flow chart illustrating a communication method according to an illustrative embodiment, which is performed by a base station. As shown in FIG. 20, the method includes the following steps.

In step S2001, an additional switching time reported by a terminal is received, in which the additional switching time is used by the base station to apply the additional switching time to all predefined specific switching patterns.

It may be understood that the additional switching time is included in a time of an entire process of uplink antenna switching. In addition, the specific switching pattern may include multiple patterns, and the specific switching pattern may be defined according to actual needs, which is not limited in the present disclosure.

For example, in a case where the specific switching pattern includes a first specific pattern and a second specific pattern, after reporting the additional switching time, the terminal may perform uplink antenna switching in the first specific pattern and the second specific pattern according to the additional switching time.

In an example, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Correspondingly, the additional switching time may be configured by taking the first bandwidth part as a reference bandwidth part and multiplexing a subcarrier spacing of the reference bandwidth part.

It may be understood that a granularity of the additional switching time may be a time domain symbol, that is, a length of the additional switching time may be represented by the time domain symbol.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

In the embodiments of the present disclosure, the additional switching time reported by the terminal is received, and applied to all predefined specific switching patterns, such that the terminal may be synchronized with the base station when performing uplink antenna switching in a specific pattern, thereby ensuring the reliable communication between the terminal and the base station.

In some embodiments, in a case where the terminal performs a transmission at one port corresponding to one carrier in a first band and another port corresponding to one carrier in a second band in a next transmission, and a previous transmission of the terminal is a transmission at one port corresponding to one carrier in a third band and another port corresponding to one carrier in a fourth band, the switching time needs to be constrained to enable an uplink antenna to reliably switch from the third band and the fourth band to the first band and the second band.

Based on this, a switching period N included in the switching time may be constrained to ensure reliable switching of the uplink antenna. In an implementation, the switching period N=min{max {N_first&third, N_second&fourth}, max{N_second&third, N_first&fourth}}. Alternatively, in another implementation, the switching period N=max{N_first&third, N_second&fourth, N_second&third, N_first&fourth}. Alternatively, in one implementation, the switching period N=min{ {N_first&third+N_second&fourth}, {N_second&third+N_first&fourth}}.

In other embodiments, the switching period N may be configured by the base station via a signaling, which may include one or more of an RRC signaling, a media access control control element (MAC CE), or downlink control information (DCI). For example, the DCI carries 1 bit, which represents max{N_first&third, N_second&fourth} in a case where the 1 bit is 0, and represents max{N_second&third, N_first&fourth} in a case where the 1 bit is 1. For another example, the DCI carries 2 bits, which represent N_first&third in a case where the 2 bits are 00, represent N_second&fourth in a case where the 2 bits are 01, represent N_second&third in a case where the 2 bits are 10, and represent N_first&fourth in a case where the 2 bits are 11.

In the above embodiments, N_first&third is a switching period of a band pair consisting of the first band and the third band, N_second&fourth is a switching period of a band pair consisting of the second band and the fourth band, N_first&fourth is a switching period of a band pair consisting of the first band and the fourth band, and N_second&third is a switching period of a band pair consisting of the second band and the third band.

FIG. 21 is a block diagram illustrating a communication apparatus according to an illustrative embodiment, which is applied to a terminal.

As shown in FIG. 21, the communication apparatus 2100 includes: a reporting module 2101 configured to report option information corresponding to a band combination to a base station with the band combination as a granularity; in which the band combination includes at least two bands, and correspondingly the band combination includes at least one band pair formed by combining the at least two bands; and the option information indicates a sending form supported by respective band pairs and/or respective bands in the band combination.

Optionally, in a case where the option information corresponding to the band combination is a dual UL, the option information indicates that all band pairs in the band combination only support a concurrent transmission; in a case where the option information corresponding to the band combination is a switched UL, the option information indicates that all bands in the band combination only support a single transmission; and in a case where the option information corresponding to the band combination is both the dual UL and the switched UL, the option information indicates that the at least one band pair in the band combination supports the concurrent transmission, and at least one band in the band combination supports the single transmission.

Optionally, the communication apparatus 2100 includes: a first reporting module configured to report support information corresponding to the at least one band pair in the band combination to the base station in response to determining that the option information corresponding to the band combination is both the dual UL and the switched UL, in which band pairs in the at least one band pair are in one-to-one correspondence with the support information, and the support information corresponding to the at least one band pair indicates a sending form supported by a band pair corresponding to the support information.

Optionally, in a case where support information corresponding to one band pair in the at least one band pair is the concurrent transmission, the support information indicates that the band pair only supports the concurrent transmission; in a case where the support information corresponding to one band pair in the at least one band pair is the single transmission, the support information indicates that two bands in the band pair only support the single transmission; and in a case where the support information corresponding to one band pair in the at least one band pair is a full transmission, the support information indicates that the band pair supports the concurrent transmission, and two bands in the band pair support the single transmission.

Optionally, the support information corresponding to the at least one band pair includes support information corresponding to at least three band pairs, and a numeric count of the at least three band pairs is less than or equal to a numeric count of band pairs included in the band combination; and support information corresponding to two target band pairs in the at least three band pairs is first support information and second support information, respectively.

Optionally, support information corresponding to other band pairs in the support information corresponding to the at least one band pair is determined by the terminal according to its own capabilities, and the other band pairs are band pairs in the at least three band pairs except a target band pair.

Optionally, the first support information is the single transmission and the second support information is the concurrent transmission; or the first support information is the concurrent transmission and the second support information is the single transmission.

Optionally, a numeric count of the at least one band pair is not greater than a numeric count of band pairs included in the band combination; and support information corresponding to individual band pairs in the support information corresponding to the at least one band pair is the same and is third support information.

Optionally, the third support information is the concurrent transmission, and the support information corresponding to the at least one band pair indicates that the at least one band pair in the band combination only supports the concurrent transmission, and band pairs except the at least one band pair in the band combination only support the single transmission; or the third support information is the full transmission, and the support information corresponding to the at least one band pair indicates that the at least one band pair in the band combination supports both the concurrent transmission and the single transmission, and band pairs except the at least one band pair in the band combination only support the single transmission; or the third support information is the single transmission, and the support information corresponding to the at least one band pair indicates that the at least one band pair in the band combination only supports the single transmission, and band pairs except the at least one band pair in the band combination only support the concurrent transmission, or band pairs except the at least one band pair in the band combination support both the concurrent transmission and the single transmission.

Optionally, the communication apparatus 2100 includes: a switching module configured to receive an RRC signaling for indicating single antenna switching sent by the base station; and determine to switch a first antenna in the terminal to a third band or switch a second antenna in the terminal to a third band according to a switching time of band pairs formed with the third band in response to the first antenna being in a first band, the second antenna being in a second band, and a next transmission of the terminal being in the third band.

Optionally, the switching module is configured to: determine to switch the first antenna to the third band in response to determining that a switching time of a first band pair consisting of the first band and the third band is greater than a switching time of a second band pair consisting of the second band and the third band; or determine to switch the first antenna to the third band in response to determining that a switching time of a first band pair consisting of the first band and the third band is less than a switching time of a second band pair consisting of the second band and the third band.

Optionally, the switching module is configured to: determine to switch the first antenna to the third band or switch the second antenna to the third band according to a frequency point of the first band and a frequency point of the second band in response to determining that the switching time of the first band pair consisting of the first band and the third band is equal to the switching time of the second band pair consisting of the second band and the third band.

Optionally, the switching module is configured to: determine to switch the first antenna to the third band in response to determining that the frequency point of the first band is greater than the frequency point of the second band, and determine to switch the second antenna to the third band in response to determining that the frequency point of the second band is greater than the frequency point of the first band; or determine to switch the first antenna to the third band in response to determining that the frequency point of the first band is less than the frequency point of the second band, and determine to switch the second antenna to the third band in response to determining that the frequency point of the second band is less than the frequency point of the first band.

Optionally, the switching module is configured to: determine to switch the first antenna to the third band in response to determining that a first difference is less than a second difference, and determine to switch the second antenna to the third band in response to determining that the second difference is less than the first difference; or determine to switch the first antenna to the third band in response to determining that a first difference is greater than a second difference, and determine to switch the second antenna to the third band in response to determining that the second difference is greater than the first difference; in which the first difference is an absolute value of a difference between the frequency point of the first band and the frequency point of the third band, and the second difference is an absolute value of a difference between the frequency point of the second band and the frequency point of the third band.

Optionally, the communication apparatus 2100 includes: a second reporting module configured to report specific switching patterns requiring an additional switching time to the base station.

Optionally, the specific switching patterns correspond to a same additional switching time.

Optionally, the specific switching patterns correspond to different additional switching time, and the communication apparatus 2100 includes: a third reporting module configured to report the additional switching time corresponding to each of the specific switching patterns.

Optionally, the communication apparatus 2100 includes: a fourth reporting module configured to report the additional switching time to the base station, in which the additional switching time is used by the base station to apply the additional switching time to all predefined specific switching patterns.

Optionally, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

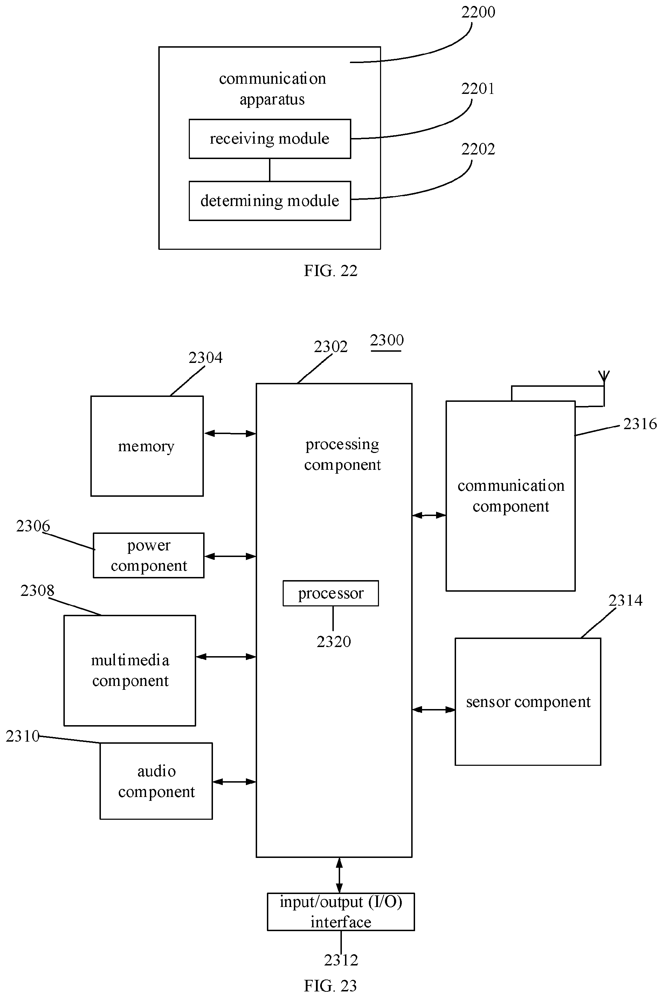

FIG. 22 is a block diagram illustrating a communication apparatus according to an illustrative embodiment, which is applied to a base station.

As shown in FIG. 22, the apparatus 2200 includes: a receiving module 2201 configured to receive option information corresponding to a band combination reported by a terminal with the band combination as a granularity, in which the band combination includes at least two bands, and correspondingly the band combination includes at least one band pair formed by combining the at least two bands; and a determining module 2202 configured to determine a sending form supported by respective band pairs and/or respective bands in the band combination according to the option information.

Optionally, the determining module 2202 includes: a first determining module configured to determine that all band pairs in the band combination only support a concurrent transmission in a case where the option information corresponding to the band combination is a dual UL; a second determining module configured to determine that all bands in the band combination only support a single transmission in a case where the option information corresponding to the band combination is a switched UL; and a third determining module configured to determine that at least one band pair in the band combination supports the concurrent transmission, and at least one band in the band combination supports the single transmission in a case where the option information corresponding to the band combination is both the dual UL and the switched UL.

Optionally, the communication apparatus 2200 includes: a first receiving module configured to receive support information corresponding to the at least one band pair in the band combination, in which the support information corresponding to the at least one band pair is reported by the terminal in response to determining that the option information corresponding to the band combination is both the dual UL and the switched UL, and band pairs in the at least one band pair are in one-to-one correspondence with the support information; and a fourth determining module configured to determine a sending form supported by a band pair corresponding to the support information according to the support information corresponding to the at least one band pair.

Optionally, the fourth determining module includes: a fifth determining module configured to determine that one band pair in the at least one band pair only supports the concurrent transmission in a case where support information corresponding to the band pair is the concurrent transmission; a sixth determining module configured to determine that two bands in one band pair in the at least one band pair only support the single transmission in a case where support information corresponding to the band pair is the single transmission; and a seventh determining module configured to determine that one band pair in the at least one band pair supports the concurrent transmission, and two bands in the band pair support the single transmission in a case where support information corresponding to the band pair is a full transmission.

Optionally, the support information includes support information corresponding to at least three band pairs, and a numeric count of the at least three band pairs is less than or equal to a numeric count of band pairs included in the band combination; and support information corresponding to two target band pairs in the at least three band pairs is first support information and second support information, respectively.

Optionally, support information corresponding to other band pairs in the support information corresponding to the at least one band pair is determined by the terminal according to its own capabilities, and the other band pairs are band pairs in the at least three band pairs except a target band pair.

Optionally, the first support information is the single transmission and the second support information is the concurrent transmission; or the first support information is the concurrent transmission and the second support information is the single transmission.

Optionally, a numeric count of the at least one band pair is not greater than a numeric count of band pairs included in the band combination, and support information corresponding to individual band pairs in the support information corresponding to the at least one band pair is the same and is third support information.

Optionally, the fourth determining module includes: an eighth determining module configured to determine that the at least one band pair in the band combination only supports the concurrent transmission, and band pairs except the at least one band pair in the band combination only support the single transmission in a case where the third support information is the concurrent transmission; or a ninth determining module configured to determine that the at least one band pair in the band combination supports both the concurrent transmission and the single transmission, and band pairs except the at least one band pair in the band combination only support the single transmission in a case where the third support information is the full transmission; or a tenth determining module configured to determine that the at least one band pair in the band combination only supports the single transmission, and band pairs except the at least one band pair in the band combination only support the concurrent transmission, or band pairs except the at least one band pair in the band combination support both the concurrent transmission and the single transmission in a case where the third support information is the single transmission.

Optionally, the communication apparatus 2200 includes: a first sending module configured to send an RRC signaling for indicating single antenna switching, in which the RRC signaling indicates that the terminal determines to switch a first antenna in the terminal to a third band or switch a second antenna in the terminal to a third band according to a switching time of band pairs formed with the third band in a case where the first antenna is in a first band, the second antenna is in a second band, and a next transmission of the terminal is in the third band.

Optionally, the communication apparatus 2200 includes: a second receiving module configured to receive specific switching patterns requiring an additional switching time reported by the terminal.

Optionally, the specific switching patterns correspond to a same additional switching time.

Optionally, the specific switching patterns correspond to different additional switching time, and the communication apparatus 2200 includes: a third receiving module configured to receive the additional switching time corresponding to each of the specific switching patterns reported by the terminal.

Optionally, the communication apparatus 2200 includes: a fourth receiving module configured to receive the additional switching time reported by the terminal, and apply the additional switching time to all predefined specific switching patterns.

Optionally, the additional switching time is multiple time domain symbols, a duration corresponding to the time domain symbol is associated with a reference subcarrier spacing, and the reference subcarrier spacing corresponds to a first bandwidth part in a band where an antenna is located before switched.

Optionally, the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

FIG. 23 is a block diagram illustrating an electronic device 2300 according to an illustrative embodiment. The electronic device 2300 may be provided as a terminal.

Referring to FIG. 23, the electronic device 2300 may include one or more of the following components: a processing component 2302, a memory 2304, a power component 2306, a multimedia component 2308, an audio component 2310, an input/output (I/O) interface 2312, a sensor component 2314, and a communication component 2316.

The processing component 2302 typically controls overall operations of the electronic device 2300, such as the operations associated with display, phone calls, data communications, camera operations, and recording operations. The processing component 2302 may include one or more processors 2320 to execute instructions to perform all or some of the steps in the above-described communication methods. Moreover, the processing component 2302 may include one or more modules which facilitate the interaction between the processing component 2302 and other components. For instance, the processing component 2302 may include a multimedia module to facilitate the interaction between the multimedia component 2308 and the processing component 2302.

The memory 2304 is configured to store various types of data to support the operation of the electronic device 2300. Examples of such data include instructions for any applications or communication methods operated on the electronic device 2300, contact data, phonebook data, messages, pictures, videos, etc. The memory 2304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2306 provides power to various components of the electronic device 2300. The power component 2306 may include a power management system, one or more power sources, and any other components associated with the generation, management, and distribution of power in the electronic device 2300.

The multimedia component 2308 includes a screen providing an output interface between the electronic device 2300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2308 includes a front camera and/or a rear camera. The front camera and/or the rear camera may receive an external multimedia datum while the electronic device 2300 is in an operation mode, such as a photographing mode or a video mode. Each of the front camera and the rear camera may be a fixed optical lens system or have focus and optical zoom capability.

The audio component 2310 is configured to output and/or input audio signals. For example, the audio component 2310 includes a microphone (MIC) configured to receive an external audio signal when the electronic device 2300 is in an operation mode, such as a call mode, a recording mode, and a voice recognition mode. The received audio signal may be further stored in the memory 2304 or transmitted via the communication component 2316. In some embodiments, the audio component 2310 further includes a speaker to output audio signals.

The I/O interface 2312 provides an interface between the processing component 2302 and peripheral interface modules, such as keyboards, click wheels, buttons, and the like. The buttons may include, but are not limited to, a home button, a volume button, a starting button, and a locking button.

The sensor component 2314 includes one or more sensors to provide status assessments of various aspects of the electronic device 2300. For instance, the sensor component 2314 may detect an open/closed status of the electronic device 2300, relative positioning of components, e.g., the display and the keypad, of the electronic device 2300, a change in position of the electronic device 2300 or a component of the electronic device 2300, a presence or absence of user contact with the electronic device 2300, an orientation or an acceleration/deceleration of the electronic device 2300, and a change in temperature of the electronic device 2300. The sensor component 2314 may include a proximity sensor configured to detect the presence of nearby objects without any physical contact. The sensor component 2314 may further include a light sensor, such as a CMOS or CCD image sensor, for use in imaging applications. In some embodiments, the sensor component 2314 may further include an accelerometer sensor, a gyroscope sensor, a magnetic sensor, a pressure sensor, or a temperature sensor.

The communication component 2316 is configured to facilitate communication, wired or wireless, between the electronic device 2300 and other devices. The electronic device 2300 may access a wireless network based on a communication standard, such as Wi-Fi, 2G, or 3G, or a combination thereof. In an illustrative embodiment, the communication component 2316 receives a broadcast signal or broadcast associated information from an external broadcast management system via a broadcast channel. In an illustrative embodiment, the communication component 2316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the electronic device 2300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above-mentioned communication methods.

In an illustrative embodiment, there is also provided a non-transitory computer readable storage medium including instructions, such as included in the memory 2304, executable by the processor 2320 in the electronic device 2300, for completing the above-mentioned communication methods. For example, the non-transitory computer-readable storage medium may be a ROM, a random access memory (RAM), a CD-ROM, a magnetic tape, a floppy disc, an optical data storage device, and the like.

In another illustrative embodiment, there is also provided a computer program product. The computer program product includes a computer program executable by a programmable device, and the computer program has a code portion for executing the above communication methods when executed by the programmable device.

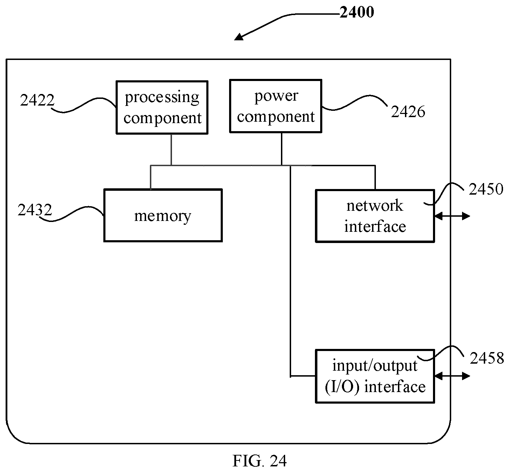

FIG. 24 is a block diagram illustrating an electronic device according to an illustrative embodiment. For example, the electronic device 2400 may be provided as a base station. Referring to FIG. 24, the electronic device 2400 includes a processing component 2422 and a memory resource represented by a memory 2432. The processing component 2422 may further include one or more processors. The memory 2432 is configured to store instructions executable by the processing component 2422, such as an application program. The application program stored in the memory 2432 may include one or more modules each corresponding to a set of instructions. In addition, the processing component 2422 is configured to execute the instructions to perform the steps of the communication methods provided in the above method embodiments.

The electronic device 2400 further includes a power component 2426 configured to perform a power management on the electronic device 2400, a wired or wireless network interface 2450 configured to connect the electronic device 2400 to the network, and an input/output (I/O) interface 2458. The electronic device 2400 may operate an operating system stored in the memory 2432, such as Windows Server^{™}, Mac OS X^{™}, Unix^{™}, Linux^{™}, Free BSD^{™}, or the like.

In another illustrative embodiment, there is also provided a computer program product. The computer program product includes a computer program executable by a programmable device, and the computer program has a code portion for executing the above communication methods when executed by the programmable device.

It is intended that the scope of the present disclosure only be limited by the appended claims.

## Claims

1. A communication method, performed by a terminal, comprising:
reporting (S201, S301) option information corresponding to a band combination to a base station with the band combination as a granularity;
wherein the band combination comprises at least two bands, and correspondingly the band combination comprises at least one band pair formed by combining the at least two bands; and
**characterized by**:
in a case where the option information corresponding to the band combination is a dual uplink, UL, the option information indicates that all band pairs in the band combination only support a concurrent transmission, in a case where the option information corresponding to the band combination is a switched UL, the option information indicates that all bands in the band combination only support a single transmission, and in a case where the option information corresponding to the band combination is both the dual UL and the switched UL, the option information indicates that the at least one band pair in the band combination supports the concurrent transmission, and at least one band in the band combination supports the single transmission.

2. The method of claim 1, further comprising:
reporting (S302) support information corresponding to the at least one band pair in the band combination to the base station in response to determining that the option information corresponding to the band combination is both the dual UL and the switched UL, wherein the support information corresponding to the at least one band pair indicates whether a corresponding band pair supports the concurrent transmission or the single transmission, and band pairs in the at least one band pair are in one-to-one correspondence with the support information.

3. The method of claim 2, wherein
in a case where support information corresponding to one band pair in the at least one band pair is the concurrent transmission, the support information indicates that the band pair only supports the concurrent transmission;
in a case where the support information corresponding to one band pair in the at least one band pair is the single transmission, the support information indicates that two bands in the band pair only support the single transmission; and
in a case where the support information corresponding to one band pair in the at least one band pair is a full transmission, the support information indicates that the band pair supports the concurrent transmission, and two bands in the band pair support the single transmission.

4. The method of claim 1, further comprising:
receiving (S401) a radio resource control, RRC, signaling for indicating single antenna switching sent by the base station; and
determining (S401) to switch a first antenna in the terminal to a third band or switch a second antenna in the terminal to a third band according to a switching time of band pairs formed with the third band in response to the first antenna being in a first band, the second antenna being in a second band, and a next transmission of the terminal being in the third band.

5. The method of claim 4, wherein determining (S401) to switch the first antenna to the third band or switch the second antenna to the third band according to the switching time of the band pairs formed with the third band comprises:
determining (S502) to switch the first antenna to the third band in response to determining that a switching time of a first band pair consisting of the first band and the third band is greater than a switching time of a second band pair consisting of the second band and the third band; or determining (S502) to switch the first antenna to the third band in response to determining that a switching time of a first band pair consisting of the first band and the third band is less than a switching time of a second band pair consisting of the second band and the third band; or
determining (S602) to switch the first antenna to the third band or switch the second antenna to the third band according to a frequency point of the first band and a frequency point of the second band in response to determining that a switching time of a first band pair consisting of the first band and the third band is equal to a switching time of a second band pair consisting of the second band and the third band.

6. The method of claim 5, wherein determining (S602) to switch the first antenna to the third band or switch the second antenna to the third band according to the frequency point of the first band and the frequency point of the second band comprises:
determining (S703) to switch the first antenna to the third band in response to determining that the frequency point of the first band is greater than the frequency point of the second band, and determining to switch the second antenna to the third band in response to determining that the frequency point of the second band is greater than the frequency point of the first band; or determining (S703) to switch the first antenna to the third band in response to determining that the frequency point of the first band is less than the frequency point of the second band, and determining to switch the second antenna to the third band in response to determining that the frequency point of the second band is less than the frequency point of the first band; or
determining (S803) to switch the first antenna to the third band in response to determining that a first difference is less than a second difference, and determining (S803) to switch the second antenna to the third band in response to determining that the second difference is less than the first difference; or determining (S803) to switch the first antenna to the third band in response to determining that a first difference is greater than a second difference, and determining (S803) to switch the second antenna to the third band in response to determining that the second difference is greater than the first difference; wherein the first difference is an absolute value of a difference between the frequency point of the first band and the frequency point of the third band, and the second difference is an absolute value of a difference between the frequency point of the second band and the frequency point of the third band.

7. The method of claim 1, further comprising:
reporting (S901, S1001) specific switching patterns requiring an additional switching time to the base station; or
reporting (S1101) an additional switching time to the base station, wherein the additional switching time is used by the base station to apply the additional switching time to all predefined specific switching patterns,
optionally, wherein the additional switching time is a plurality of time domain symbols, a duration corresponding to the time domain symbol is associated with a reference subcarrier spacing, and the reference subcarrier spacing corresponds to a first bandwidth part in a band where an antenna is located before switched,
optionally, wherein the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

8. A communication method, performed by a base station, comprising:
receiving (S1201, S1301) option information corresponding to a band combination reported by a terminal with the band combination as a granularity, wherein the band combination comprises at least two bands, and correspondingly the band combination comprises at least one band pair formed by combining the at least two bands; and
**characterized by**:
determining (S1302) that all band pairs in the band combination only support a concurrent transmission in a case where the option information corresponding to the band combination is a dual uplink, UL, determining (S1303) that all bands in the band combination only support a single transmission in a case where the option information corresponding to the band combination is a switched UL, and determining (S1304) that at least one band pair in the band combination supports the concurrent transmission, and at least one band in the band combination supports the single transmission in a case where the option information corresponding to the band combination is both the dual UL and the switched UL.

9. The method of claim 8, further comprising:
receiving (S1401, S1501) support information corresponding to the at least one band pair in the band combination, wherein the support information corresponding to the at least one band pair is reported by the terminal in response to determining that the option information corresponding to the band combination is both the dual UL and the switched UL, and band pairs in the at least one band pair are in one-to-one correspondence with the support information; and
determining (S1402) whether a corresponding band pair supports the concurrent transmission or the single transmission according to the support information corresponding to the at least one band pair,
optionally, wherein determining (S1402) whether a corresponding band pair supports the concurrent transmission or the single transmission according to the support information corresponding to the at least one band pair comprises: determining (S1502) that one band pair in the at least one band pair only supports the concurrent transmission in a case where support information corresponding to the band pair is the concurrent transmission; determining (S1503) that two bands in one band pair in the at least one band pair only support the single transmission in a case where support information corresponding to the band pair is the single transmission; and determining (S1504) that one band pair in the at least one band pair supports the concurrent transmission, and two bands in the band pair support the single transmission in a case where support information corresponding to the band pair is a full transmission.

10. The method of claim 8, further comprising:
sending (S1701) a radio resource control, RRC, signaling for indicating single antenna switching, wherein the RRC signaling indicates that the terminal determines to switch a first antenna in the terminal to a third band or switch a second antenna in the terminal to a third band according to a switching time of band pairs formed with the third band in a case where the first antenna is in a first band, the second antenna is in a second band, and a next transmission of the terminal is in the third band.

11. The method of claim 8, further comprising:
receiving (S1801, S1901) specific switching patterns requiring an additional switching time reported by the terminal; or
receiving (S2001) an additional switching time reported by the terminal, and applying the additional switching time to all predefined specific switching patterns,
optionally, wherein the additional switching time is a plurality of time domain symbols, a duration corresponding to the time domain symbol is associated with a reference subcarrier spacing, and the reference subcarrier spacing corresponds to a first bandwidth part in a band where an antenna is located before switched,
optionally, wherein the first bandwidth part is a newly activated bandwidth part, or the first bandwidth part is an initial bandwidth part, or the first bandwidth part is a first activated bandwidth part, or the first bandwidth part is a bandwidth part with a highest center frequency point, or the first bandwidth part is a bandwidth part with a lowest center frequency point, or the first bandwidth part is a bandwidth part with a maximum subcarrier spacing, or the first bandwidth part is a bandwidth part with a minimum subcarrier spacing.

12. A terminal, configured to perform the method of any one of claims 1 to 7.

13. A base station, configured to perform the method of any one of claims 8 to 11.

## Patentansprüche

1. Ein Kommunikationsverfahren, das von einem Endgerät durchgeführt wird, mit folgenden Schritten:
Berichten (S201, S301) von Optionsinformationen, die einer Bandkombination entsprechen, an eine Basisstation mit der Bandkombination als Granularität;
wobei die Bandkombination zumindest zwei Bänder aufweist und entsprechend die Bandkombination zumindest ein Bandpaar aufweist, das durch Kombinieren der zumindest zwei Bänder gebildet wird; und
**gekennzeichnet durch**:
in einem Fall, in dem die Optionsinformationen, die der Bandkombination entsprechen, ein dualer Uplink, UL, sind, die Optionsinformationen angeben, dass alle Bandpaare in der Bandkombination nur eine gleichzeitige Übertragung unterstützen, in einem Fall, in dem die Optionsinformationen, die der Bandkombination entsprechen, ein geschalteter UL sind, die Optionsinformationen angeben, dass alle Bänder in der Bandkombination nur eine einzelne Übertragung unterstützen, und in einem Fall, in dem die Optionsinformationen, die der Bandkombination entsprechen, sowohl der duale UL als auch der geschaltete UL sind, die Optionsinformationen angeben, dass das zumindest eine Bandpaar in der Bandkombination die gleichzeitige Übertragung unterstützt und zumindest ein Band in der Bandkombination die einzelne Übertragung unterstützt.

2. Das Verfahren gemäß Anspruch 1, das ferner folgenden Schritt aufweist:
Berichten (S302) von Unterstützungsinformationen, die dem zumindest einen Bandpaar in der Bandkombination entsprechen, an die Basisstation ansprechend auf ein Bestimmen, dass die Optionsinformationen, die der Bandkombination entsprechen, sowohl der duale UL als auch der geschaltete UL sind, wobei die Unterstützungsinformationen, die dem zumindest einen Bandpaar entsprechen, angeben, ob ein entsprechendes Bandpaar die gleichzeitige Übertragung oder die einzelne Übertragung unterstützt, und Bandpaare in dem zumindest einen Bandpaar in einer Eins-zu-Eins-Entsprechung mit den Unterstützungsinformationen stehen.

3. Das Verfahren gemäß Anspruch 2, wobei
in einem Fall, in dem Unterstützungsinformationen, die einem Bandpaar in dem zumindest einen Bandpaar entsprechen, die gleichzeitige Übertragung sind, die Unterstützungsinformationen angeben, dass das Bandpaar nur die gleichzeitige Übertragung unterstützt;
in einem Fall, in dem die Unterstützungsinformationen, die einem Bandpaar in dem zumindest einen Bandpaar entsprechen, die einzelne Übertragung sind, die Unterstützungsinformationen angeben, dass zwei Bänder in dem Bandpaar nur die einzelne Übertragung unterstützen; und
in einem Fall, in dem die Unterstützungsinformationen, die einem Bandpaar in dem zumindest einen Bandpaar entsprechen, eine vollständige Übertragung sind, die Unterstützungsinformationen angeben, dass das Bandpaar die gleichzeitige Übertragung unterstützt und zwei Bänder in dem Bandpaar die einzelne Übertragung unterstützen.

4. Das Verfahren gemäß Anspruch 1, das ferner folgende Schritte aufweist:
Empfangen (S401) einer Funkressourcensteuerung, RCC,-Signalisierung zum Angeben einer einzelnen Antennenumschaltung, die durch die Basisstation gesendet wird; und
Bestimmen (S401), eine erste Antenne in dem Endgerät auf ein drittes Band umzuschalten oder eine zweite Antenne in dem Endgerät auf ein drittes Band umzuschalten, gemäß einer Umschaltzeit von Bandpaaren, die mit dem dritten Band gebildet werden, ansprechend darauf, dass die erste Antenne in einem ersten Band ist, die zweite Antenne in einem zweiten Band ist und eine nächste Übertragung des Endgeräts in dem dritten Band ist.

5. Das Verfahren gemäß Anspruch 4, wobei das Bestimmen (S401), die erste Antenne auf das dritte Band umzuschalten oder die zweite Antenne auf das dritte Band umzuschalten, gemäß der Umschaltzeit der Bandpaare, die mit dem dritten Band gebildet werden, folgende Schritte aufweist:
Bestimmen (S502), die erste Antenne auf das dritte Band umzuschalten, ansprechend auf ein Bestimmen, dass eine Umschaltzeit eines ersten Bandpaars, das aus dem ersten Band und dem dritten Band besteht, größer ist als eine Umschaltzeit eines zweiten Bandpaars, das aus dem zweiten Band und dem dritten Band besteht; oder Bestimmen (S502), die erste Antenne auf das dritte Band umzuschalten, ansprechend auf ein Bestimmen, dass eine Umschaltzeit eines ersten Bandpaars, das aus dem ersten Band und dem dritten Band besteht, kleiner ist als eine Umschaltzeit eines zweiten Bandpaars, das aus dem zweiten Band und dem dritten Band besteht; oder
Bestimmen (S602), die erste Antenne auf das dritte Band umzuschalten oder die zweite Antenne auf das dritte Band umzuschalten, gemäß einem Frequenzpunkt des ersten Bands und einem Frequenzpunkt des zweiten Bands, ansprechend auf ein Bestimmen, dass eine Umschaltzeit eines ersten Bandpaars, das aus dem ersten Band und dem dritten Band besteht, gleich einer Umschaltzeit eines zweiten Bandpaars ist, das aus dem zweiten Band und dem dritten Band besteht.

6. Das Verfahren gemäß Anspruch 5, wobei das Bestimmen (S602), die erste Antenne auf das dritte Band umzuschalten oder die zweite Antenne auf das dritte Band umzuschalten, gemäß dem Frequenzpunkt des ersten Bands und dem Frequenzpunkt des zweiten Bands folgende Schritte aufweist:
Bestimmen (S703), die erste Antenne auf das dritte Band umzuschalten, ansprechend auf ein Bestimmen, dass der Frequenzpunkt des ersten Bands größer ist als der Frequenzpunkt des zweiten Bands, und Bestimmen, die zweite Antenne auf das dritte Band umzuschalten, ansprechend auf ein Bestimmen, dass der Frequenzpunkt des zweiten Bands größer ist als der Frequenzpunkt des ersten Bands; oder Bestimmen (S703), die erste Antenne auf das dritte Band umzuschalten, ansprechend auf ein Bestimmen, dass der Frequenzpunkt des ersten Bands kleiner ist als der Frequenzpunkt des zweiten Bands, und Bestimmen, die zweite Antenne auf das dritte Band umzuschalten, ansprechend auf ein Bestimmen, dass der Frequenzpunkt des zweiten Bands kleiner ist als der Frequenzpunkt des ersten Bands; oder
Bestimmen (S803), die erste Antenne auf das dritte Band umzuschalten, ansprechend auf ein Bestimmen, dass eine erste Differenz kleiner ist als eine zweite Differenz, und Bestimmen (S803), die zweite Antenne auf das dritte Band umzuschalten, ansprechend auf ein Bestimmen, dass die zweite Differenz kleiner ist als die erste Differenz; oder Bestimmen (S803), die erste Antenne auf das dritte Band umzuschalten, ansprechend auf ein Bestimmen, dass eine erste Differenz größer ist als eine zweite Differenz, und Bestimmen (S803), die zweite Antenne auf das dritte Band umzuschalten, ansprechend auf ein Bestimmen, dass die zweite Differenz größer ist als die erste Differenz; wobei die erste Differenz ein Absolutwert einer Differenz zwischen dem Frequenzpunkt des ersten Bands und dem Frequenzpunkt des dritten Bands ist und die zweite Differenz ein Absolutwert einer Differenz zwischen dem Frequenzpunkt des zweiten Bands und dem Frequenzpunkt des dritten Bands ist.

7. Das Verfahren gemäß Anspruch 1, das ferner folgende Schritte aufweist:
Berichten (S901, S1001) spezifischer Umschaltmuster, die eine zusätzliche Umschaltzeit erfordern, an die Basisstation; oder
Berichten (S1101) einer zusätzlichen Umschaltzeit an die Basisstation, wobei die zusätzliche Umschaltzeit durch die Basisstation verwendet wird, um die zusätzliche Umschaltzeit auf alle vordefinierten spezifischen Umschaltmuster anzuwenden,
wobei optional die zusätzliche Umschaltzeit eine Mehrzahl von Zeitbereichssymbolen ist, eine Dauer, die dem Zeitbereichssymbol entspricht, einem Referenzunterträgerabstand zugeordnet ist und der Referenzunterträgerabstand einem ersten Bandbreitenteil in einem Band entspricht, in dem sich eine Antenne vor dem Umschalten befindet,
wobei optional der erste Bandbreitenteil ein neu aktivierter Bandbreitenteil ist oder der erste Bandbreitenteil ein anfänglicher Bandbreitenteil ist oder der erste Bandbreitenteil ein erster aktivierter Bandbreitenteil ist oder der erste Bandbreitenteil ein Bandbreitenteil mit einem höchsten Mittenfrequenzpunkt ist oder der erste Bandbreitenteil ein Bandbreitenteil mit einem niedrigsten Mittenfrequenzpunkt ist oder der erste Bandbreitenteil ein Bandbreitenteil mit einem maximalen Unterträgerabstand ist oder der erste Bandbreitenteil ein Bandbreitenteil mit einem minimalen Unterträgerabstand ist.

8. Ein Kommunikationsverfahren, das von einer Basisstation durchgeführt wird, mit folgenden Schritten:
Empfangen (S1201, S1301) von Optionsinformationen, die einer Bandkombination entsprechen, die von einem Endgerät mit der Bandkombination als Granularität berichtet wird, wobei die Bandkombination zumindest zwei Bänder aufweist und entsprechend die Bandkombination zumindest ein Bandpaar aufweist, das durch Kombinieren der zumindest zwei Bänder gebildet wird; und
**gekennzeichnet durch**:
Bestimmen (S1302), dass alle Bandpaare in der Bandkombination nur eine gleichzeitige Übertragung unterstützen, in einem Fall, in dem die Optionsinformationen, die der Bandkombination entsprechen, ein dualer Uplink, UL, sind, Bestimmen (S1303), dass alle Bänder in der Bandkombination nur eine einzelne Übertragung unterstützen, in einem Fall, in dem die Optionsinformationen, die der Bandkombination entsprechen, ein geschalteter UL sind, und Bestimmen (S1304), dass zumindest ein Bandpaar in der Bandkombination die gleichzeitige Übertragung unterstützt und zumindest ein Band in der Bandkombination die einzelne Übertragung unterstützt, in einem Fall, in dem die Optionsinformationen, die der Bandkombination entsprechen, sowohl der duale UL als auch der geschaltete UL sind.

9. Das Verfahren gemäß Anspruch 8, das ferner folgende Schritte aufweist:
Empfangen (S1401, S1501) von Unterstützungsinformationen, die dem zumindest einen Bandpaar in der Bandkombination entsprechen, wobei die Unterstützungsinformationen, die dem zumindest einen Bandpaar entsprechen, durch das Endgerät berichtet werden, ansprechend auf ein Bestimmen, dass die Optionsinformationen, die der Bandkombination entsprechen, sowohl der duale UL als auch der geschaltete UL sind, und Bandpaare in dem zumindest einen Bandpaar in einer Eins-zu-Eins-Entsprechung mit den Unterstützungsinformationen stehen; und
Bestimmen (S1402), ob ein entsprechendes Bandpaar die gleichzeitige Übertragung oder die einzelne Übertragung unterstützt, gemäß den Unterstützungsinformationen, die dem zumindest einen Bandpaar entsprechen,
wobei optional das Bestimmen (S1402), ob ein entsprechendes Bandpaar die gleichzeitige Übertragung oder die einzelne Übertragung unterstützt, gemäß den Unterstützungsinformationen, die dem zumindest einen Bandpaar entsprechen, folgende Schritte aufweist: Bestimmen (S1502), dass ein Bandpaar in dem zumindest einen Bandpaar nur die gleichzeitige Übertragung unterstützt, in einem Fall, in dem Unterstützungsinformationen, die dem Bandpaar entsprechen, die gleichzeitige Übertragung sind; Bestimmen (S1503), dass zwei Bänder in einem Bandpaar in dem zumindest einen Bandpaar nur die einzelne Übertragung unterstützen, in einem Fall, in dem Unterstützungsinformationen, die dem Bandpaar entsprechen, die einzelne Übertragung sind; und Bestimmen (S1504), dass ein Bandpaar in dem zumindest einen Bandpaar die gleichzeitige Übertragung unterstützt und zwei Bänder in dem Bandpaar die einzelne Übertragung unterstützen, in einem Fall, in dem Unterstützungsinformationen, die dem Bandpaar entsprechen, eine vollständige Übertragung sind.

10. Das Verfahren gemäß Anspruch 8, das ferner folgenden Schritt aufweist:
Senden (S1701) einer Funkressourcensteuerung, RCC,-Signalisierung zum Angeben einer einzelnen Antennenumschaltung, wobei die RCC-Signalisierung angibt, dass das Endgerät bestimmt, eine erste Antenne in dem Endgerät auf ein drittes Band umzuschalten oder eine zweite Antenne in dem Endgerät auf ein drittes Band umzuschalten, gemäß einer Umschaltzeit von Bandpaaren, die mit dem dritten Band gebildet werden, in einem Fall, in dem die erste Antenne in einem ersten Band ist, die zweite Antenne in einem zweiten Band ist und eine nächste Übertragung des Endgeräts in dem dritten Band ist.

11. Das Verfahren gemäß Anspruch 8, das ferner folgende Schritte aufweist:
Empfangen (S1801, S1901) spezifischer Umschaltmuster, die eine zusätzliche Umschaltzeit erfordern, die durch das Endgerät berichtet wird; oder
Empfangen (S2001) einer zusätzlichen Umschaltzeit, die durch das Endgerät berichtet wird, und Anwenden der zusätzlichen Umschaltzeit auf alle vordefinierten spezifischen Umschaltmuster,
wobei optional die zusätzliche Umschaltzeit eine Mehrzahl von Zeitbereichssymbolen ist, eine Dauer, die dem Zeitbereichssymbol entspricht, einem Referenzunterträgerabstand zugeordnet ist und der Referenzunterträgerabstand einem ersten Bandbreitenteil in einem Band entspricht, in dem sich eine Antenne vor dem Umschalten befindet,
wobei optional der erste Bandbreitenteil ein neu aktivierter Bandbreitenteil ist oder der erste Bandbreitenteil ein anfänglicher Bandbreitenteil ist oder der erste Bandbreitenteil ein erster aktivierter Bandbreitenteil ist oder der erste Bandbreitenteil ein Bandbreitenteil mit einem höchsten Mittenfrequenzpunkt ist oder der erste Bandbreitenteil ein Bandbreitenteil mit einem niedrigsten Mittenfrequenzpunkt ist oder der erste Bandbreitenteil ein Bandbreitenteil mit einem maximalen Unterträgerabstand ist oder der erste Bandbreitenteil ein Bandbreitenteil mit einem minimalen Unterträgerabstand ist.

12. Ein Endgerät, das dazu konfiguriert ist, das Verfahren gemäß einem der Ansprüche 1 bis 7 durchzuführen.

13. Eine Basisstation, die dazu konfiguriert ist, das Verfahren gemäß einem der Ansprüche 8 bis 11 durchzuführen.

## Revendications

1. Procédé de communication, mis en œuvre par un terminal, comprenant :
le signalement (S201, S301) des informations d'option correspondant à une combinaison de bandes à une station de base, avec la combinaison de bandes comme une granularité ;
dans lequel la combinaison de bandes comprend au moins deux bandes, et, par conséquent, la combinaison de bandes comprend au moins une paire de bandes formée en combinant les au moins deux bandes ; et **caractérisée en ce que** :
dans un cas où les informations d'option correspondant à la combinaison de bandes sont de type à liaison montante double, UL, les informations d'option indiquent que toutes les paires de bandes dans la combinaison de bandes ne prennent en charge qu'une transmission simultanée ; dans un cas où les informations d'option correspondant à la combinaison de bandes sont de type à UL commutée, les informations d'option indiquent que toutes les bandes dans la combinaison de bandes ne prennent en charge qu'une transmission unique ; et dans un cas où les informations d'option correspondant à la combinaison de bandes sont à la fois de type à UL double et de type à UL commutée, les informations d'option indiquent que l'au moins une paire de bandes dans la combinaison de bandes prend en charge la transmission simultanée, et au moins une bande dans la combinaison de bandes prend en charge la transmission unique.

2. Procédé selon la revendication 1, comprenant en outre :
le signalement (S302) des informations de prise en charge correspondant à l'au moins une paire de bandes dans la combinaison de bandes à la station de base, en réponse à la détermination que les informations d'option correspondant à la combinaison de bandes sont à la fois de type à UL double et de type à UL commutée, dans lequel les informations de prise en charge correspondant à l'au moins une paire de bandes indique si une paire de bandes correspondante prend en charge la transmission simultanée ou la transmission unique, et les paires de bandes dans l'au moins une paire de bandes sont en correspondance biunivoque avec les informations de prise en charge.

3. Procédé selon la revendication 2, dans lequel :
dans un cas où les informations de prise en charge correspondant à une paire de bandes dans l'au moins une paire de bandes sont la transmission simultanée, les informations de prise en charge indiquent que la paire de bandes ne prend en charge que la transmission simultanée ;
dans un cas où les informations de prise en charge correspondant à une paire de bandes dans l'au moins une paire de bandes sont la transmission unique, les informations de prise en charge indiquent que deux bandes dans la paire de bandes ne prennent en charge que la transmission unique ; et
dans un cas où les informations de prise en charge correspondant à une paire de bandes dans l'au moins une paire de bandes sont la transmission complète, les informations de prise en charge indiquent que la paire de bandes prend en charge la transmission simultanée, et deux bandes dans la paire de bandes prennent en charge la transmission unique.

4. Procédé selon la revendication 1, comprenant en outre :
la réception (S401) d'une signalisation de commande de ressource radio, RRC, pour indiquer une commutation d'antenne unique envoyée par la station de base ; et
la détermination (S401) de commuter une première antenne dans le terminal vers une troisième bande ou de commuter une deuxième antenne dans le terminal vers une troisième bande selon un temps de commutation de paires de bandes formées avec la troisième bande en réponse au fait que la première antenne se trouve dans une première bande, la deuxième antenne étant dans une deuxième bande, et une transmission suivante du terminal étant dans la troisième bande.

5. Procédé selon la revendication 4, dans lequel la détermination (S401) de commuter la première antenne vers la troisième bande ou de commuter la deuxième antenne vers la troisième bande selon le temps de commutation des paires de bandes formées avec la troisième bande comprend :
la détermination (S502) de commuter la première antenne vers la troisième bande en réponse à la détermination qu'un temps de commutation d'une première paire de bandes, composée de la première bande et de la troisième bande, est supérieur à un temps de commutation d'une deuxième paire de bandes, composée de la deuxième bande et de la troisième bande ; ou la détermination (S502) de commuter la première antenne vers la troisième bande en réponse à la détermination qu'un temps de commutation d'une première paire de bandes, composée de la première bande et de la troisième bande, est inférieur à un temps de commutation d'une deuxième paire de bandes, composée de la deuxième bande et de la troisième bande ; ou
la détermination (S602) de commuter la première antenne vers la troisième bande ou de commuter la deuxième antenne vers la troisième bande, selon un point de fréquence de la première bande et un point de fréquence de la deuxième bande, en réponse à la détermination qu'un temps de commutation d'une première paire de bandes, composée de la première bande et de la troisième bande, est égal à un temps de commutation d'une deuxième paire de bandes, composée de la deuxième bande et de la troisième bande.

6. Procédé selon la revendication 5, dans lequel la détermination (S602) de commuter la première antenne vers la troisième bande ou de commuter la deuxième antenne vers la troisième bande selon le point de fréquence de la première bande et le point de fréquence de la deuxième bande comprend :
la détermination (S703) de commuter la première antenne vers la troisième bande en réponse à la détermination que le point de fréquence de la première bande est supérieur que le point de fréquence de la deuxième bande, et la détermination de commuter la deuxième antenne vers la troisième bande en réponse à la détermination que le point de fréquence de la deuxième bande est supérieur que le point de fréquence de la première bande ; ou la détermination (S703) de commuter la première antenne vers la troisième bande en réponse à la détermination que le point de fréquence de la première bande est inférieur que le point de fréquence de la deuxième bande, et la détermination de commuter la deuxième antenne vers la troisième bande en réponse à la détermination que le point de fréquence de la deuxième bande est inférieur que le point de fréquence de la première bande ; ou
la détermination (S803) de commuter la première antenne vers la troisième bande en réponse à la détermination qu'une première différence est inférieure à une deuxième différence, et la détermination (S803) de commuter la deuxième antenne vers la troisième bande en réponse à la détermination que la deuxième différence est inférieure à la première différence ; ou la détermination (S803) de commuter la première antenne vers la troisième bande en réponse à la détermination qu'une première différence est supérieure à une deuxième différence, et la détermination (S803) de commuter la deuxième antenne vers la troisième bande en réponse à la détermination que la deuxième différence est supérieure à la première différence ; dans lequel la première différence est une valeur absolue d'une différence entre le point de fréquence de la première bande et le point de fréquence de la troisième bande, et la deuxième différence est une valeur absolue d'une différence entre le point de fréquence de la deuxième bande et le point de fréquence de la troisième bande.

7. Procédé selon la revendication 1, comprenant en outre :
le signalement (S901, S1001) de schémas de commutation spécifiques nécessitant un temps de commutation supplémentaire à la station de base ; ou
le signalement (S1101) d'un temps de commutation supplémentaire à la station de base, dans lequel le temps de commutation supplémentaire est utilisé par la station de base pour appliquer le temps de commutation supplémentaire à tous les schémas de commutation spécifiques prédéfinis,
éventuellement, dans lequel le temps de commutation supplémentaire est une pluralité de symboles du domaine temporel, une durée correspondant à un symbole du domaine temporel est associée à un espacement de sous-porteuse de référence, et l'espacement de sous-porteuse de référence correspond à une première partie de bande passante dans une bande dans laquelle se trouve une antenne avant la commutation,
éventuellement, dans lequel la première partie de bande passante est une partie de bande passante nouvellement activée, ou la première partie de bande passante est une première partie de bande passante, ou la première partie de bande passante est une première partie de bande passante activée, ou la première partie de bande passante est une partie de bande passante avec un point de fréquence centrale le plus élevé, ou la première partie de bande passante est une partie de bande passante avec un point de fréquence centrale le plus bas, ou la première partie de bande passante est une partie de bande passante avec un espacement maximal entre les sous-porteuses, ou la première partie de bande passante est une partie de bande passante avec un espacement minimal entre les sous-porteuses.

8. Procédé de communication, mis en œuvre par une station de base, comprenant :
la réception (S1201, S1301) d'informations d'option correspondant à une combinaison de bandes signalée par un terminal avec la combinaison de bandes comme une granularité, dans lequel la combinaison de bandes comprend au moins deux bandes, et, par conséquent, la combinaison de bandes comprend au moins une paire de bandes formée en combinant les au moins deux bandes ; et **caractérisé par** :
la détermination (S1302) que toutes les paires de bandes dans la combinaison de bandes ne prennent en charge qu'une transmission simultanée dans un cas où les informations d'option correspondant à la combinaison de bandes est une liaison montante double, UL, la détermination (S1303) que toutes les bandes dans la combinaison de bandes ne prennent en charge qu'une transmission unique dans un cas où les informations d'option correspondant à la combinaison de bandes est une UL commutée, et la détermination (S1304) qu'au moins une paire de bandes dans la combinaison de bandes prend en charge la transmission simultanée, et au moins une bande dans la combinaison de bandes prend en charge la transmission unique, dans un cas où les informations d'option correspondant à la combinaison de bandes sont à la fois l'UL double et l'UL commutée.

9. Procédé selon la revendication 8, comprenant en outre :
la réception (S1401, S1501) des informations de prise en charge correspondant à l'au moins une paire de bandes dans la combinaison de bandes, dans lequel les informations de prise en charge correspondant à l'au moins une paire de bandes sont signalées par le terminal en réponse à la détermination que les informations d'option correspondant à la combinaison de bandes sont à la fois à l'UL double et à l'UL commutée, et les paires de bandes dans l'au moins une paire de bandes sont en correspondance biunivoque avec les informations de prise en charge ; et
la détermination (S1402) si une paire de bandes correspondante prend en charge la transmission simultanée ou la transmission unique, selon les informations de prise en charge correspondant à l'au moins une paire de bandes,
éventuellement, dans lequel la détermination (S1402) si une paire de bandes correspondante prend en charge la transmission simultanée ou la transmission unique, selon les informations de prise en charge correspondant à l'au moins une paire de bandes, comprend : la détermination (S1502) qu'une paire de bandes dans l'au moins une paire de bandes ne prend en charge que la transmission simultanée dans un cas où les informations de prise en charge correspondant à la paire de bandes sont la transmission simultanée ; la détermination (S1503) que deux bandes dans une paire de bandes dans l'au moins une paire de bandes ne prennent en charge que la transmission unique dans un cas où les informations de prise en charge correspondant à la paire de bandes sont la transmission unique ; et la détermination (S1504) qu'une paire de bandes dans l'au moins une paire de bandes prend en charge la transmission simultanée, et deux bandes de la paire de bandes prennent en charge la transmission unique dans un cas où les informations de prise en charge correspondant à la paire de bandes sont une transmission complète.

10. Procédé selon la revendication 8, comprenant en outre :
l'envoi (S1701) d'une signalisation de commande de ressources radio, RRC, indiquant une commutation d'antenne unique, dans lequel la signalisation RRC indique que le terminal détermine de commuter une première antenne dans le terminal vers une troisième bande ou de commuter une deuxième antenne dans le terminal vers une troisième bande selon un temps de commutation de paires de bandes formées avec la troisième bande, dans un cas où la première antenne est dans une première bande, la deuxième antenne est dans une deuxième bande et une transmission suivante du terminal est dans la troisième bande.

11. Procédé selon la revendication 8, comprenant en outre :
la réception (S1801, S1901) de schémas de commutation spécifiques nécessitant un temps de commutation supplémentaire signalé par le terminal ; ou
la réception (S2001) d'un temps de commutation supplémentaire signalé par le terminal, et l'application du temps de commutation supplémentaire à tous les schémas de commutation spécifiques prédéfinis,
éventuellement, dans lequel le temps de commutation supplémentaire est une pluralité de symboles du domaine temporel, une durée correspondant à un symbole du domaine temporel est associée à un espacement de sous-porteuse de référence, et l'espacement de sous-porteuse de référence correspond à une première partie de bande passante dans une bande dans laquelle se trouve une antenne avant la commutation,
éventuellement, dans lequel la première partie de bande passante est une partie de bande passante nouvellement activée, ou la première partie de bande passante est une première partie de bande passante, ou la première partie de bande passante est une première partie de bande passante activée, ou la première partie de bande passante est une partie de bande passante avec un point de fréquence centrale le plus élevé, ou la première partie de bande passante est une partie de bande passante avec un point de fréquence centrale le plus bas, ou la première partie de bande passante est une partie de bande passante avec un espacement maximal entre les sous-porteuses, ou la première partie de bande passante est une partie de bande passante avec un espacement minimal entre les sous-porteuses.

12. Terminal, configuré pour mettre en œuvre le procédé selon l'une quelconque des revendications 1 à 7.

13. Station de base, configurée pour mettre en œuvre le procédé selon l'une quelconque des revendications 8 à 11.
